(19) Europäisches Patentamt
European Patent Office
Office européen des brevets

(11) **EP 4 611 444 A1**

(12) **EUROPEAN PATENT APPLICATION**
published in accordance with Art. 153(4) EPC

(43) Date of publication:
**03.09.2025 Bulletin 2025/36**

(21) Application number: **22963077.7**

(22) Date of filing: **27.10.2022**

(51) International Patent Classification (IPC):
**H04W 52/24** $^{(2009.01)}$

(52) Cooperative Patent Classification (CPC):
**H04W 52/24**

(86) International application number:
**PCT/CN2022/127927**

(87) International publication number:
**WO 2024/087093 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **LIU, Zhe**
**Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHODS, TERMINAL DEVICES AND NETWORK DEVICE**

(57) Embodiments of the present disclosure provide a method of wireless communication, a terminal device and a network device. For some PUCCHs that each has a conflict in a time domain and for which it is not possible to find a PUSCH associated with the same spatial parameter for multiplexing, a corresponding processing method is designed, thereby optimizing PUCCH transmission. In addition, in the embodiments of the present disclosure, the terminal device can report a PHR corresponding to spatial parameter information, so as to realize PHR reporting in a simultaneous transmission scenario of a multi-antenna panel.

<u>**200**</u>

A terminal device multiplexes UCI information carried in P PUCCHs among M PUCCHs onto PUSCHs associated with same spatial parameters as the P PUCCHs among N PUSCHs, where the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M - P — S210

The terminal device multiplexes UCI information carried in the S PUCCHs onto PUSCHs associated with a first target spatial parameter among the N PUSCHs; or the terminal device transmits first uplink information, where the first uplink information does not include at least one of: part or all of the S PUCCHs, and part or all of the PUSCHs overlapping with the S PUCCHs in the time domain among the N PUSCHs. — S220

FIG. 8

**Description**

## TECHNICAL FIELD

Embodiments of the present disclosure relate to the field of communications, and in particular, to a method of wireless communication, a terminal device, and a network device.

## BACKGROUND

In a New Radio (NR) system, if a physical uplink control channel (PUCCH) and a physical uplink shared channel (PUSCH) conflict in a time domain (i.e., overlap in the time domain), uplink control information (UCI) information carried in the PUCCH may be multiplexed onto the PUSCH according to the multiplexing rules. However, for some conflict scenarios in the time domain, the PUCCH may overlap with a PUSCH associated with multiple spatial parameters in the time domain. How to deal with such scenarios is a problem that needs to be solved. In addition, how to report a power headroom report (PHR) in a simultaneous transmission scenario of a multi-antenna panel is also a problem that needs to be solved.

## SUMMARY

Embodiments of the present disclosure provide a method of wireless communication, a terminal device, and a network device. For some PUCCHs that each has conflict in a time domain and for which it is not possible to find a PUSCHs associated with a same spatial parameter for multiplexing, a corresponding processing method is designed, thereby optimizing the PUCCH transmission. In addition, in the embodiments of the present disclosure, the terminal device may report a PHR corresponding to spatial parameter information, so as to realize PHR reporting in a simultaneous transmission scenario of a multi-antenna panel.

In a first aspect, a method of wireless communication is provided, and the method includes:

multiplexing, by a terminal device, uplink control information (UCI) information carried in P physical uplink control channels (PUCCHs) among M PUCCHs onto physical uplink shared channels (PUSCHs) associated with same spatial parameters as the P PUCCHs among N PUSCHs, where the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M-P; and
multiplexing, by the terminal device, UCI information carried in the S PUCCHs onto PUSCHs associated with a first target spatial parameter among the N PUSCHs; or transmitting, by the terminal device, first uplink information, where the first uplink information does not include at least one of: part or all of the S PUCCHs, and part or all of the PUSCHs overlapping with the S PUCCHs in the time domain among the N PUSCHs.

In a second aspect, a method of wireless communication is provided, and the method includes:
reporting, by a terminal device, a power headroom report (PHR) corresponding to spatial parameter information.
In a third aspect, a method of wireless communication is provided, and the method includes:
receiving, by a network device, a power headroom report (PHR) corresponding to spatial parameter information.
In a fourth aspect, a terminal device is provided to perform the method in the first aspect.
Specifically, the terminal device includes a functional module for performing the method in the first aspect.
In a fifth aspect, a terminal device is provided to perform the method in the second aspect.
Specifically, the terminal device includes a functional module for performing the method in the second aspect.
In a sixth aspect, a network device is provided to perform the method in the third aspect.
Specifically, the network device includes a functional module for performing the method in the third aspect.
In a seventh aspect, a terminal device is provided, including a processor and a memory. The memory is configured to store a computer program, and the processor is configured to call the computer program stored in the memory and run the computer program, to enable the terminal device to perform the method in the first aspect.
In an eighth aspect, a terminal device is provided, including a processor and a memory. The memory is configured to store a computer program, and the processor is configured to call the computer program stored in the memory and run the computer program, to enable the terminal device to perform the method in the second aspect.
In a ninth aspect, a network device is provided, including a processor and a memory. The memory is configured to store a computer program, and the processor is configured to call the computer program stored in the memory and run the computer program, to enable the network device to perform the method in the third aspect.
In a tenth aspect, an apparatus is provided to perform the method in any one of the above first to third aspects.
Specifically, the apparatus includes a processor configured to call a computer program from a memory and run the computer program, to enable a device equipped with the apparatus to perform the method in any one of the first to third aspects.

In an eleventh aspect, a computer-readable storage medium is provided to store a computer program, where the computer program enables a computer to perform the method in any one of the first to third aspects.

In a twelfth aspect, a computer program product is provided, including computer program instructions, where the computer program instructions enable a computer to perform the method in any one of the first to third aspects.

In a thirteenth aspect, a computer program is provided, where the computer program, when executed on a computer, enables the computer to perform the method in any one of the first to third aspects.

Through the technical solution of the first aspect, the terminal device multiplexes the UCI information carried in the S PUCCHs onto the PUSCHs associated with the first target spatial parameter among the N PUSCHs, or the first uplink information transmitted by the terminal device does not include at least one of: the part or all of the S PUCCHs, and the part or all of the PUSCHs overlapping with the S PUCCHs in the time domain among the N PUSCHs. That is, for some PUCCHs that each has a conflict in the time domain and for which it is not possible to find a PUSCH associated with the same spatial parameter for multiplexing, the terminal device may multiplex the UCI information carried in the PUCCHs onto the PUSCHs associated with specific spatial parameters, or the terminal device may discard the PUCCHs, or the terminal device may discard the PUSCHs that overlap with the PUCCHs in the time domain, thereby optimizing the PUCCH transmission.

Through the technical solutions of the second and third aspects, the terminal device may report the PHR corresponding to the spatial parameter information, so as to realize PHR reporting in a simultaneous transmission scenario of a multi-antenna panel.

## BRIEF DESCRIPTION OF THE DRAWINGS

FIG. 1 is a schematic diagram of a communication system architecture applied in embodiments of the present disclosure.

FIG. 2 is a schematic diagram illustrating a PUSCH carrying a PHR provided in the present disclosure.

FIG. 3 is another schematic diagram illustrating a PUSCH carrying a PHR provided in the present disclosure.

FIG. 4 is a schematic diagram illustrating uplink transmission performed simultaneously by multiple panels/TRPs provided in the present disclosure.

FIG. 5 is a schematic diagram illustrating multi-PUSCH transmission scheduled with multi-DCI provided in the present disclosure.

FIG. 6 is a schematic diagram illustrating a conflict between a PUCCH and a PUSCH in a time domain provided in the present disclosure.

FIG. 7 is a schematic diagram illustrating another conflict between a PUCCH and a PUSCH in a time domain provided in the present disclosure.

FIG. 8 is a schematic flowchart of a method of wireless communication provided in accordance with embodiments of the present disclosure.

FIG. 9 is a schematic diagram illustrating uplink transmission performed simultaneously by multiple panels/TRPs provided in accordance with embodiments of the present disclosure.

FIG. 10 is a schematic flowchart of another method of wireless communication provided in accordance with embodiments of the present disclosure.

FIG. 11 is a schematic diagram illustrating a first PUSCH provided in accordance with embodiments of the present disclosure.

FIG. 12 is a schematic diagram illustrating a second PUSCH provided in accordance with embodiments of the present disclosure.

FIG. 13 is a schematic block diagram of a terminal device provided in accordance with embodiments of the present disclosure.

FIG. 14 is a schematic block diagram of another terminal device provided in accordance with embodiments of the present disclosure.

FIG. 15 is a schematic block diagram of a network device provided in accordance with embodiments of the present disclosure.

FIG. 16 is a schematic block diagram of a communication device provided in accordance with embodiments of the present disclosure.

FIG. 17 is a schematic block diagram of an apparatus provided in accordance with embodiments of the present disclosure.

FIG. 18 is a schematic block diagram of a communication system provided in accordance with embodiments of the present disclosure.

## DETAILED DESCRIPTION

Technical solutions in embodiments of the present disclosure will be described below with reference to drawings in the embodiments of the present disclosure. It is apparent that the described embodiments are only part of the embodiments of the present disclosure, rather than all of the embodiments. With respect to the embodiments in the present disclosure, all other embodiments obtained by ordinary skilled in the art without making any creative work shall fall within the scope of protection of the present disclosure.

The technical solutions of the embodiments of the present disclosure may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a New Radio (NR) system, an NR system evolution system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), internet of things (IoT), wireless fidelity (WiFi), a 5th-generation (5G) communication system, a 6th-generation (6G) communication system, and other communication systems.

Generally speaking, traditional communication systems support a limited number of connections which are easy to be implemented. However, with development of communication technology, mobile communication systems will support not only traditional communication, but also, for example, device to device (D2D) communication, machine to machine (M2M) communication, machine type communication (MTC), vehicle to vehicle (V2V) communication, sidelink (SL) communication, vehicle to everything (V2X) communication, etc. The embodiments of the present disclosure may also be applied to these communication systems.

In some embodiments, a communication system in the embodiments of the present disclosure may be applied to a carrier aggregation (CA) scenario, may also be applied to a dual connectivity (DC) scenario, may further be applied to a standalone (SA) networking scenario, or may be applied to a non-standalone (NSA) networking scenario.

In some embodiments, the communication system in the embodiments of the present disclosure may be applied to an unlicensed spectrum, where the unlicensed spectrum may also be considered as a shared spectrum; alternatively, the communication system in the embodiments of the present disclosure may be applied to a licensed spectrum, where the licensed spectrum may also be considered as an unshared spectrum.

In some embodiments, the communication system in the embodiments of the present disclosure may be applied to an FR1 frequency band (corresponding to a frequency band range of 410 MHz to 7.125 GHz), and may also be applied to an FR2 frequency band (corresponding to a frequency band range of 24.25 GHz to 52.6 GHz), and may further be applied to a new frequency band, such as a high-frequency frequency band corresponding to a frequency band range of 52.6 GHz to 71 GHz or corresponding to a frequency band range of 71 GHz to 114.25 GHz.

In the embodiments of the present disclosure, each embodiment will be described in conjunction with a network device and a terminal device, in which the terminal device may also be referred to as user equipment (UE), an access terminal, a user unit, a user station, a mobile station, a mobile platform, a remote station, a remote terminal, a mobile device, a user terminal, a terminal, a wireless communication device, a user agent or user apparatus, etc.

The terminal device may be a station (STATION, ST) in the WLAN, which may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, an in-vehicle device, a wearable device, a terminal device in a next-generation communication system (e.g., an NR network), or a terminal device in a future evolved public land mobile network (PLMN) network.

In the embodiments of the present disclosure, the terminal device may be deployed on land, including indoor or outdoor, handheld, wearable or in-vehicle; the terminal device may also be deployed on water (e.g., on a steamship); and the terminal device may further be deployed in air (e.g., on an airplane, on a balloon, or on a satellite).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, an in-vehicle communication device, a wireless communication chip/application specific integrated circuit (ASIC)/system on chip (SoC), or the like.

As an example but not limitation, in the embodiments of the present disclosure, the terminal device may be a wearable device. The wearable device may also be referred to as a wearable smart device, which is a generic term for a wearable device by using wearable technologies to intelligently design everyday wear, such as glasses, gloves, watches, clothing or shoes. The wearable device is a portable device that is worn directly on a body, or integrated into a user's clothing or accessories. The wearable device is not only a hardware device, but also achieves powerful functions through software support as well as data interaction and cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smartphones), such as various smart bracelets and smart jewelries for monitoring physical signs.

In the embodiments of the present disclosure, the network device may be a device used for communicating with a mobile device. The network device may be an access point (AP) in the WLAN, a base transceiver station (BTS) in the GSM or CDMA, a NodeB (NB) in the WCDMA, an evolutional node B (eNB or eNodeB) in the LTE, a relay station or access point, an in-vehicle device, a wearable device, a network device, gNodeB (gNB) or transmission reception point (TRP) in an NR network, a network device in a future evolved PLMN network, or a network device in an NTN network.

As an example but not limitation, in the embodiments of the present disclosure, the network device may have a mobile characteristic. For example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments, the network device may also be a base station set up on land, water, or the like.

In the embodiments of the present disclosure, the network device may provide services for a cell, and a terminal device may communicate with the network device via transmission resources (e.g., frequency domain resources, or frequency spectrum resources) used by the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have the characteristics of small coverage and low transmission power, which are applicable for providing data transmission services with high speed.

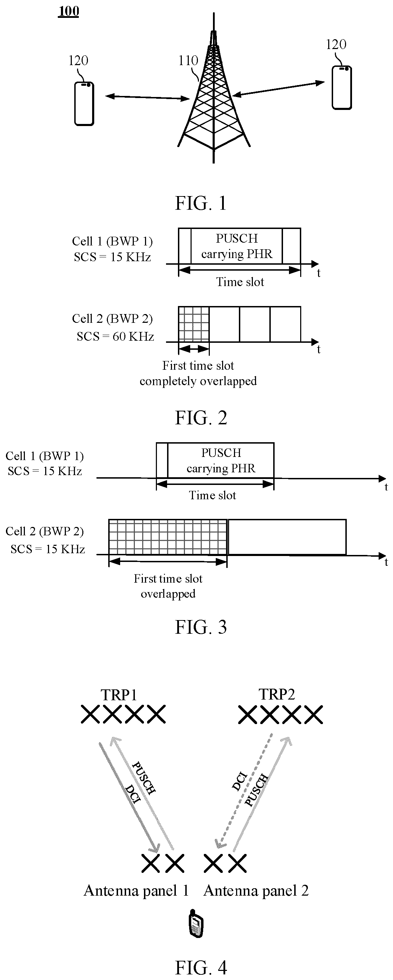

Exemplarily, a communication system 100 applied in the embodiments of the present disclosure is illustrated in FIG. 1. The communication system 100 may include a network device 110. The network device 110 may be a device for communicating with a terminal device 120 (or referred to as a communication terminal or a terminal). The network device 110 may provide communication coverage for a specific geographical area and may communicate with terminal devices located within the coverage area.

FIG. 1 exemplarily illustrates one network device and two terminal devices. In some embodiments, the communication system 100 may include multiple network devices and each network device may include another number of terminal devices within its coverage area, which is not limited in the embodiments of the present disclosure.

In some embodiments, the communication system 100 may further include other network entities, such as a network controller and a mobility management entity, which is not limited in the embodiments of the present disclosure.

It should be understood that a device having communication functions in a network/system in the embodiments of the present disclosure may be referred to as a communication device. Taking the communication system 100 illustrated in FIG. 1 as an example, the communication devices may include the network device 110 and the terminal device 120 having communication functions. The network device 110 and the terminal device 120 may be specific devices described above and will not be repeated herein. The communication devices may further include other devices in the communication system 100, such as network controllers, mobile management entities and other network entities, which are not limited in the embodiments of the present disclosure.

It should be understood that the terms "system" and "network" are often used interchangeably herein. The term "and/or" herein is only an association relationship describing associated objects, which means that there may be three relationships between associated objects. For example, A and/or B may represent that: A exists alone, both A and B exist, and B exists alone. In addition, the character "/" herein generally represents that related objects before and after this character are in an "or" relationship.

It should be understood that there are terminal devices and network devices involved herein, where the terminal devices include mobile phones, machine facilities, customer premise equipment (CPE), industrial equipment, vehicles, and the like; and the network devices may be access network devices (e.g., gNB), core network devices, or the like.

The terms used in the implementations of the present disclosure are only used to explain the specific embodiments of the present disclosure, but not intended to limit the present disclosure. The terms "first," "second," "third," "fourth" etc., in the specification, claims and drawings of the present disclosure are used to distinguish different objects, rather than to describe a specific order. In addition, the terms "include," "comprise," "have" and any variations thereof are intended to cover non-exclusive inclusions.

It should be understood that "indicate" mentioned in the embodiments of the present disclosure may mean a direct indication, or an indirect indication, or an indication of an associated relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present disclosure, the term "correspond" may mean that there is a direct correspondence or indirect correspondence between the two, or it may mean that there is an association relationship between the two, or it may mean a relationship of indicating and being indicated, or configuring and being configured, or the like.

In the embodiments of the present disclosure, "pre-defined" or "pre-configured" may be implemented by pre-saving corresponding codes, tables or other methods used for indicating relevant information in devices (for example, including a terminal device and a network device), and the present disclosure does not limit the specific implementation method thereof. For example, pre-defined may refer to what is defined in a protocol.

In the embodiments of the present disclosure, the "protocol" may refer to standard protocols in the communication field, for example, may be an evolution of an existing LTE protocol, an NR protocol, a Wi-Fi protocol, or a protocol related to other communication systems. The present disclosure does not limit the protocol type.

To facilitate understanding of the technical solutions of the embodiments of the present disclosure, the technical solutions of the present disclosure are described in detail below through specific embodiments. The following related technologies may be arbitrarily combined with the technical solutions of the embodiments of the present disclosure as optional solutions, and these combinations all belong to the protection scope of the embodiments of the present disclosure. The embodiments of the present disclosure include at least part of the following contents.

In order to better understand the embodiments of the present disclosure, a power headroom report (PHR) mechanism related to the present disclosure is explained.

Both Type 1 PHR and Type 3 PHR will be reported by a terminal device to a network device via a physical uplink shared channel (PUSCH).

Type 1 PHR is used to report the power headroom of the terminal device for transmitting PUSCH. Type 1 PHR is classified into: a PHR based on an actually transmitted PUSCH and a PHR based on the reference PUSCH.

In some embodiments, the PHR based on the actually transmitted PUSCH is a difference between the maximum transmission power of the terminal device and the actually transmitted PUSCH, as illustrated in Formula 1:

$$PH_{\text{type1},b,f,c}(i,j,q_d,l) = P_{\text{CMAX},f,c}(i) - \left\{ P_{\text{O\_PUSCH}b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \right\}$$

[dB]

Formula 1;

where in Formula 1, the unit of PH is dB;

b: represents a bandwidth part (BWP);
f: represents a carrier (e.g., an uplink (UL) carrier or a supplementary uplink carrier (SUL) within a cell);
c: represents a serving cell;
i: represents a transmission occasion;
j: represents a parameter configuration index;
$q_d$: an index of a reference signal used for path loss measurement; and
l: an index of a closed-loop power control adjustment state.

Open-loop power control parameters in the above Formula 1 include:

$P_{O\_PUSCH,b,f,c}(j)$, representing target received power;
$\alpha_{b,f,c}(j)$, representing a weighting factor of path loss; and
$PL_{b,f,c}(q_d)$, representing a path loss value measured according to a reference signal used for the path loss.

Closed-loop power control parameters in the above Formula 1 include:

$f_{b,f,c}(i, l)$, representing a closed-loop power control adjustment state, including cumulative closed-loop power control (acting on a power control accumulated value via an accumulator) and absolute closed-loop power control (acting directly on a power adjustment value);
$P_{\text{CMAX},f,c}(i)$, representing the maximum transmission power of a carrier f of the terminal device in the serving cell c; and
$M_{\text{RB},b,f,c}^{\text{PUSCH}}(i)$, representing a transmission bandwidth of the PUSCH (the number of resource blocks (RBs) allocated for resources).

In some embodiments, the PHR based on the reference PUSCH is a difference between the maximum transmission power of the terminal device and the reference PUSCH power. It can be understood that the carrier does not transmit the PUSCH at the moment of calculating the PHR, as illustrated in Formula 2:

$$PH_{\text{type1}b,f,c}(i,j,q_d,l) = \tilde{P}_{\text{CMAX}f,c}(i) - \left\{ P_{\text{O\_PUSCH}b,f,c}(j) + \alpha_{b,f,c}(j) \cdot PL_{b,f,c}(q_d) + f_{b,f,c}(i,l) \right\} \; [\text{dB}] \; \text{Formula}$$

$$2;$$

where in Formula 2, $\tilde{P}_{\text{CMAX},f,c}(i)$ represents the maximum transmission power determined based on a specific parameter value, and parameters that are the same as those in the above Formula 1 have the same meanings as above and are not repeated here.

Type 3 PHR is used to report the power headroom of the terminal device for transmitting a sounding reference signal (SRS), and Type 3 PHR is reported only on carriers that are not configured with the PUSCH. Type 3 PHR is classified into: a PHR based on an actually transmitted SRS and a PHR based on a reference SRS.

In some embodiments, the PHR based on the actually transmitted SRS is a difference between the maximum transmission power of the terminal device and the actually transmitted SRS power, as illustrated in Formula 3.

$$PH_{\text{type3},b,f,c}(i,q_s) = P_{\text{CMAX},f,c}(i) - \left\{ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i) \right\}$$

$$[\text{dB}]$$

Formula 3;

where in Formula 3, parameters that are the same as those in the above Formula 1 have the same meanings as above and are not repeated here, in which

$q_s$: represents an index of an SRS resource set; and
$h_{b,f,c}(i, l)$: represents an SRS closed-loop power control adjustment state.

The SRS power control is performed based on an SRS resource set, and SRS resources in a single SRS resource set use the same power control parameters.

The SRS resource set index of the open-loop power control parameters $P_{\text{O\_SRS},b,f,c}(q_s)$ and $\alpha_{\text{SRS},b,f,c}(q_s)$, and a reference signal index used to calculate the path loss $PL_{b,f,c}(q_d)$ are configured based on the SRS resource set and are configured by RRC signaling.

$h_{b,f,c}(i, l)$ can be indicated by the RRC signaling using the same closed-loop power adjustment control state or using independent closed-loop power control adjustment states for the closest PUSCHs associated in the time domain.

In some embodiments, the PHR based on the reference SRS is a difference between the maximum transmission power of the terminal device and the reference SRS power. It can be understood that the carrier does not transmit SRS at the moment of calculating the PHR, as illustrated in Formula 4.

$$PH_{\text{type3}b,f,c}(i,q_s) = \tilde{P}_{\text{CMAX}f,c}(i) - \left\{ P_{\text{O\_SRS}b,f,c}(q_s) + \alpha_{\text{SRS}b,f,c}(q_s) \cdot PL_{b,f,c}(q_d) + h_{b,f,c}(i) \right\} \; [\text{dB}] \quad \text{Formula}$$

$$4;$$

where in Formula 4, $\tilde{P}_{\text{CMAX},f,c}(i)$ represents the maximum transmission power determined based on a specific parameter value, and parameters that are the same as those in the above Formula 1 have the same meanings as above and are not repeated here.

In order to facilitate a better understanding of the embodiments of the present disclosure, the PHR reporting from multiple cells related to the present disclosure is explained.

In a case where the terminal device transmits PUSCH in the multiple cells at the same time, and a subcarrier spacing of an activated band width part (BWP) of different cells is different, then:

in a case where a PUSCH carrying a PHR is located in a serving cell 1, where a subcarrier spacing (SCS) of an activated BWP 1 of the cell 1 is $\mu_1$, and a PUSCH is transmitted by another serving cell 2, where an SCS of an activated BWP2 of the cell 2 is $\mu_2$, if $\mu_1 < \mu_2$, then the cell 2 reports a PHR of a corresponding first time slot among multiple time slots of the cell 2 that completely overlaps with a time slot carrying the PUSCH of the cell 1, as illustrated in FIG. 2, $\mu_1 = 15$ KHz, and $\mu_2 = 60$ KHz; and if $\mu_1 = \mu_2$, then the cell 2 reports a PHR of a corresponding first time slot of the cell 2 that overlaps with the time slot carrying the PUSCH of the cell 1, as illustrated in FIG. 3, $\mu_1 = 15$ KHz, and $\mu_2 = 15$ KHz.

In order to facilitate a better understanding of the embodiments of the present disclosure, the uplink multiple antenna panels/transmission reception points (TRPs) transmission related to the present disclosure is explained.

If the terminal is configured with multiple panels and supports simultaneous transmission of uplink information on the multiple panels, multiple uplink information may be transmitted on the multiple panels at the same time, as illustrated in FIG. 4, so as to improve the uplink spectrum efficiency. The simultaneous uplink transmission of the multiple panels/TRPs may be scheduled via single downlink control information (DCI) or via multiple DCIs. Multiple PUSCHs transmitted by the UE are in a unified transmission configuration indicator (TCI) scenario, where the multiple PUSCHs are associated with different TCI states, and the multiple PUSCHs may not overlap, partially overlap, or completely overlap in the time domain.

In order to facilitate a better understanding of the embodiments of the present disclosure, the processing when a conflict occurs between physical uplink control channels (PUCCHs), or between the PUCCH and the PUSCH related to the present disclosure is explained.

The UE may only transmit at most two PUCCHs in a single time slot in a time division manner, and at least one of the two PUCCHs is a short format PUCCH. In a case where the multiple PUCCHs overlap in the time domain, the timing relationship is set to allow the UE to have enough time to determine whether different PUCCHs need to be multiplexed, and if the different PUCCHs need to be multiplexed, the time required by the uplink control information (UCI) for repackaging is considered. In order to reduce the interference between UE uplink transmissions in NR, in a case where the PUCCH and the PUSCH overlap in the time domain, carrying the UCI information carried in the PUCCH onto the PUSCH for transmission is supported, and certain timing requirements need to be met during multiplexing.

In order to facilitate a better understanding of the embodiments of the present disclosure, the problems solved by the present disclosure are explained.

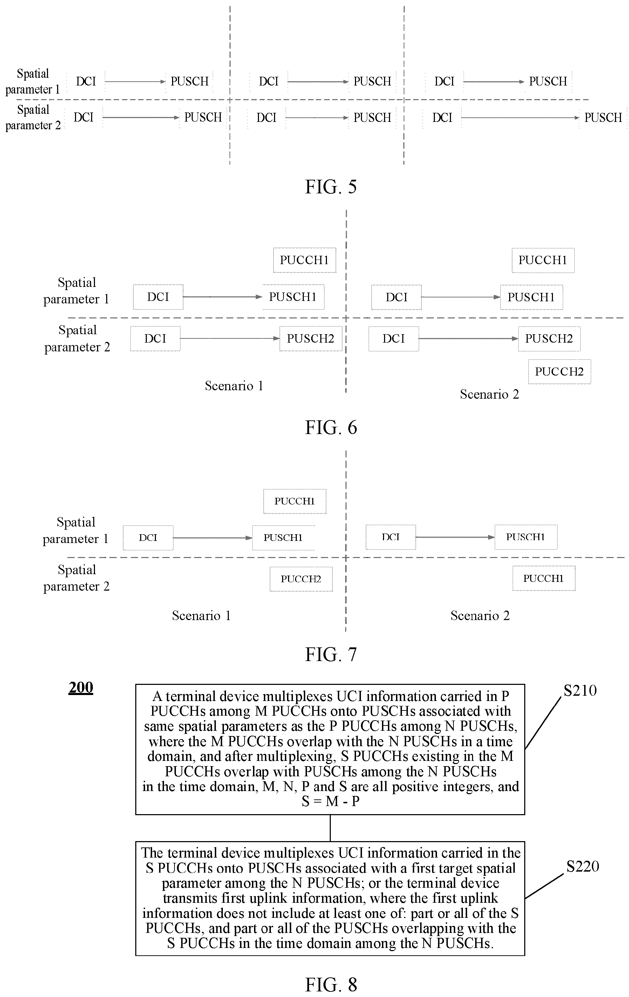

Multiple PUSCHs scheduled by multiple DCIs may overlap, partially overlap, or not overlap in the time domain, as illustrated in FIG. 5. PUCCHs corresponding to PDSCHs associated with different spatial parameters may be fed back jointly or independently. In a case where the PUCCHs are fed back independently, the PUCCHs are transmitted using a spatial parameter 1 and a spatial parameter 2 respectively. In addition, in a case of simultaneous transmission with multiple panels, the PUCCHs may be transmitted simultaneously via a single DCI indication, or the PUCCHs may be transmitted simultaneously via multiple DCI indications.

Problem 1. As illustrated in FIG. 6, if a PUCCH and a PUSCH conflict in a time domain, the PUCCH (or UCI information carried in the PUCCH) is multiplexed onto the PUSCH for transmission according to the multiplexing rule. How to process a PUCCH and a PUSCH that are associated with different spatial parameters is illustrated in a scenario 1 and a scenario 2 in FIG. 5. In the scenario 1, a PUCCH1 associated with a spatial parameter 1 may be multiplexed onto a PUSCH1 with the same spatial parameter, and the PUSCH1 and a PUSCH2 may be transmitted simultaneously. In the scenario 2, a PUCCH1 associated with a spatial parameter 1 may be multiplexed onto a PUSCH1 with the same spatial parameter, a PUCCH2 associated with a spatial parameter 2 may be multiplexed onto a PUSCH2 with the same spatial parameter, and the PUSCH1 and the PUSCH2 may be transmitted simultaneously. However, for other scenarios, for example, as illustrated in a scenario 1 and a scenario 2 in FIG. 7, in the scenario 1, a PUCCH1 associated with a spatial parameter 1 may be multiplexed onto a PUSCH1 with the same spatial parameter, but the PUSCH1 and a PUCCH2 associated with a spatial parameter 2 also overlap in the time domain; and in the scenario 2, the PUSCH1 associated with the spatial parameter 1 and the PUCCH1 associated with the spatial parameter 2 overlap in the time domain. That is, as illustrated in FIG. 7, for the PUCCH2 in the scenario 1, it is not possible to find a PUSCH with the same spatial parameter for multiplexing; and for the PUCCH1 in the scenario 2, it is not possible to find a PUSCH with the same spatial parameter for multiplexing. How to process a PUCCH and a PUSCH that are associated with different spatial parameters is a problem that needs to be solved.

Problem 2. How to report the PHR in a simultaneous transmission scenario of a multi-antenna panel is a problem that needs to be solved.

In light of the above Problem 1, the present disclosure proposes a solution for PUCCH multiplexing transmission. For some PUCCHs that each has a conflict in the time domain and for which it is not possible to find a PUSCH associated with the same spatial parameter for multiplexing, the terminal device may multiplex UCI information carried in the PUCCH onto a PUSCH associated with a specific spatial parameter, or the terminal device may discard the PUCCH, or the terminal device may discard a PUSCH that overlaps with the PUCCH in the time domain, thereby optimizing the PUCCH transmission.

In light of the above Problem 2, the present disclosure proposes a PHR reporting solution, in which the terminal device may report a PHR corresponding to spatial parameter information, so as to realize PHR reporting in a simultaneous transmission scenario of a multi-antenna panel.

The technical solution of the present disclosure is explained in detail below through specific embodiments.

FIG. 8 is a schematic flowchart of a method 200 of wireless communication in accordance with embodiments of the present disclosure. As illustrated in FIG. 8, the method 200 of wireless communication may include at least part of the following contents.

In S210, a terminal device multiplexes UCI information carried in P PUCCHs among M PUCCHs onto PUSCHs associated with same spatial parameters as the P PUCCHs among N PUSCHs, where the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M-P.

In S220, the terminal device multiplexes UCI information carried in the S PUCCHs onto PUSCHs associated with a first target spatial parameter among the N PUSCHs; or the terminal device transmits first uplink information, where the first uplink information does not include at least one of the following: part or all of the S PUCCHs, and part or all of the PUSCHs overlapping with the S PUCCHs in the time domain among the N PUSCHs.

In some embodiments, the first uplink information transmitted by the terminal device does not include at least one of the following: part or all of the S PUCCHs, and part or all of the PUSCHs overlapping with the S PUCCHs in a time domain among the N PUSCHs. That is, the terminal device discards or ignores at least one of the following: part or all of the S PUCCHs, and part or all of the PUSCHs overlapping with the S PUCCHs in the time domain among the N PUSCHs.

In some embodiments, the first uplink information may include at least one of the following: PUCCH(s) other than discarded or ignored PUCCHs among the S PUCCHs, and PUSCH(s) other than discarded or ignored PUSCHs among the N PUSCHs.

In some embodiments, the S PUCCHs are PUCCHs that conflict with PUSCHs in the time domain and for which it is not possible to find PUSCHs associated with the same spatial parameters for multiplexing. As a specific example, the S PUCCHs may include a PUCCH2 in the scenario 1 as illustrated in FIG. 7, and the S PUCCHs may also include PUCCH1 in the scenario 2 as illustrated in FIG. 7.

In some embodiments, the M PUCCHs overlap with the N PUSCHs in the time domain, including at least one of the following:

the PUCCH and the PUSCH that are partially overlapping in the time domain, and the PUCCH and the PUSCH that are completely overlapping in the time domain.

In some embodiments, the M PUCCHs and the N PUSCHs are located in a same time unit. Optionally, the time unit is one of the following: a time slot, a mini-slot, multiple symbols, a subframe, and a transmission occasion.

In some embodiments, the N PUSCHs include at least one of: a dynamically scheduled PUSCH, and a scheduling-free PUSCH.

In some embodiments, the first target spatial parameter is pre-defined (e.g., agreed upon by a protocol), or the first target spatial parameter is pre-configured (e.g., pre-configured or semi-statically configured), or the first target spatial parameter is configured by a network device (e.g., dynamically configured).

In some embodiments, the M PUCCHs and the N PUSCHs meet a timing condition for UCI information multiplexing.

It should be understood that the spatial parameter in the embodiments of the present disclosure may refer to a spatial setting or a spatial relation, etc., for transmission of uplink information (such as PUCCH and/or PUSCH).

In some embodiments of the present disclosure, the spatial parameter includes but is not limited to at least one of the following:

antenna panel information, TRP information, control resource set (CORESET) set information, transmission configuration indicator (TCI) state information, reference signal set information, reference signal information, beam information, and capability set information.

In some embodiments, the antenna panel information may include an identity (ID) or index of an antenna panel.

In some embodiments, the TRP information may include a TRP ID or a TRP index.

In some embodiments, the CORESET set information may include an ID or index of a CORESET set.

In some embodiments, the TCI state information may include a unified TCI state, or an uplink (UL) TCI state, or a joint TCI state.

In some embodiments, the reference signal set information may include at least one of the following: synchronization signal block (SSB) set information, channel state information reference signal (CSI-RS) resource set information, sounding reference signal (SRS) resource set information, and demodulation reference signal (DMRS) resource set information.

For example, the reference signal set information may include an index of a reference signal set, such as an index of an SSB set, or an index of a CSI-RS resource set, or an index of an SRS resource set, or an index of a DMRS resource set.

In some embodiments, the reference signal information may include at least one of the following: SSB information, CSI-RS resource information, SRS resource information, and DMRS resource information. For example, the reference signal information may be an index of an SRS resource, an index of an SSB resource, an index of a CSI-RS resource, or an index of a DMRS resource.

In some embodiments, the beam information may include a beam ID or a beam index.

In the embodiments of the present disclosure, the beam may also be referred to as a spatial domain transmission filter (or spatial domain filter for transmission), or a spatial domain reception filter (or spatial domain filter for reception), or a spatial reception (Rx) parameter.

In some embodiments, the capability set information may include one or more parameters. For example, the capability set information may be a capability set supported by the terminal device or reference signal information associated with the capability set supported by the terminal device.

In some embodiments, the capability set information includes but is not limited to at least one of the following: maximum number of SRS ports, maximum number of uplink transmission layers, codebook subset type, uplink full-power transmission mode, SRS antenna switching capability, SRS carrier switching capability, number of SRS resources transmitted simultaneously, maximum modulation mode for uplink data transmission, maximum modulation mode for downlink data transmission, number of hybrid automatic repeat request (HARQ) processes supported by the terminal device, channel bandwidth supported by the terminal device, number of transmission antennas supported by the terminal device, physical downlink shared channel (PDSCH) processing capability, PUSCH processing capability, power saving capability of the terminal device, coverage enhancement capability of the terminal device, data transmission rate improvement capability of the terminal device, short-delay processing capability of the terminal device, small data transmission capability of the terminal device, non-active data transmission capability of the terminal device, transmission reliability capability of the terminal device, and ultra-reliable and low latency communication (URLLC) data transmission capability of the terminal device.

In some embodiments, the uplink information (such as PUCCH and/or PUSCH) being associated with the TCI state information may include:
a transmission beam of the uplink information being determined based on the TCI state information.

In some embodiments, the uplink information (such as PUCCH and/or PUSCH) being associated with the antenna panel information may include:
the uplink information being transmitted via an antenna panel indicated by the antenna panel information.

In some embodiments, the uplink information (such as PUCCH and/or PUSCH) being associated with the TRP information may include:
the uplink information being transmitted to a TRP indicated by the TRP information.

In some embodiments, the uplink information (such as PUCCH and/or PUSCH) being associated with the CORESET set information may include:
a CORESET set indicated by the CORESET set information being a CORESET set to which a CORESET in which a physical downlink control channel (PDCCH) triggering the uplink information is located belongs, or being a CORESET set configured by higher layer signaling for resources to transmit the uplink information.

In some embodiments, the uplink information (such as PUCCH and/or PUSCH) being associated with the reference signal set information may include:
a reference signal set associated with an antenna panel used to transmit the uplink information, or a reference signal set configured by a network device for the uplink information, or a reference signal set associated with a PDCCH corresponding to the uplink information.

In some embodiments, the uplink information (such as PUCCH and/or PUSCH) being associated with the reference signal information may include:
a beam used to transmit the uplink information being determined based on a transmission beam of a reference signal indicated by the reference signal information, or being determined based on a reception beam of a reference signal indicated by the reference signal information.

In some embodiments, the uplink information (such as PUCCH and/or PUSCH) being associated with the beam information may include:
the uplink information being transmitted via a beam indicated by the beam information.

In some embodiments, the uplink information (such as PUCCH and/or PUSCH) being associated with the capability set information may include:
transmission parameters of the uplink information being determined based on the capability set information.

In some embodiments, multiplexing, by the terminal device, the UCI information carried in the S PUCCHs onto the PUSCHs associated with the first target spatial parameter among the N PUSCHs includes:
multiplexing, by the terminal device, the UCI information carried in the S PUCCHs onto the PUSCHs associated with the first target spatial parameter among the N PUSCHs in an ideal backhaul scenario.

It will be noted that in a case where a terminal device communicates with multiple TRPs, a backhaul connection between the TRPs may be ideal or non-ideal. In ideal backhaul, information may be exchanged quickly and dynamically between the TRPs. That is, in an ideal backhaul scenario, transmission delay of information interaction is small. For example, the transmission delay of information interaction is less than a first preset value, where the first preset value is agreed upon by a protocol, or the first preset value is configured by a network device. Due to the large delay in non-ideal backhaul, information may only be exchanged quasi-statically between the TRPs. That is, in a non-ideal backhaul scenario, transmission delay of the information interaction is large. For example, the transmission delay of the information interaction is greater than a second preset value, where the second preset value is agreed upon by a protocol, or the second preset value is configured by the network device. Therefore, in the ideal backhaul scenario, the terminal device multiplexes the UCI information carried in the S PUCCHs onto the PUSCHs associated with the first target spatial parameter among the N PUSCHs.

Therefore, in these embodiments, information is not discarded, and normal transmission of the PUCCH is ensured, and normal transmission of the PUSCH also be ensured.

It should be understood that the ideal backhaul may be a backhaul with very high throughput and very low delay, such as a backhaul in a scenario in which point-to-point connection uses fibers. The non-ideal backhaul is a backhaul with high delay, such as digital subscriber line (DSL), microwave, and other backhauls (such as relays). The ideal backhaul corresponds to scenarios with high throughput and low delay, such as fibers. The non-ideal backhaul, relative to the ideal backhaul, has higher delay and lower throughput, such as microwave.

In some embodiments, the terminal device may transmit the first uplink information based on a priority order. In other words, the terminal device, based on the priority order, discards or ignores at least one of the following: part or all of the S PUCCHs, and part or all of the PUSCHs overlapping with the S PUCCHs in the time domain among the N PUSCHs.

In some embodiments, in a case where a priority index associated with an i-th PUCCH is higher than a priority index associated with a PUSCH overlapping with the i-th PUCCH in a time domain among the N PUSCHs, the first uplink information does not include the PUSCH overlapping with the i-th PUCCH in the time domain among the N PUSCHs; and/or

in a case where the priority index associated with the i-th PUCCH is lower than the priority index associated with the PUSCH overlapping with the i-th PUCCH in the time domain among the N PUSCHs, the first uplink information does not include the i-th PUCCH;

where the i-th PUCCH belongs to the S PUCCHs, i is a positive integer, and $1 \leq i \leq S$.

In some embodiments, in a case where a priority index associated with an i-th PUCCH is higher than a priority index associated with a PUSCH overlapping with the i-th PUCCH in a time domain among the N PUSCHs, the terminal device discards or ignores the PUSCH overlapping with the i-th PUCCH in the time domain among the N PUSCHs; and/or

in a case where the priority index associated with the i-th PUCCH is lower than the priority index associated with the PUSCH overlapping with the i-th PUCCH in the time domain among the N PUSCHs, the terminal device discards or ignores the i-th PUCCH;

where the i-th PUCCH belongs to the S PUCCHs, i is a positive integer, and $1 \leq i \leq S$.

That is, the terminal device may discard or ignore a PUSCH or a PUCCH based on a priority index. As a specific example, the terminal device may discard or ignore all PUCCHs among the S PUCCHs, or the terminal device may discard or ignore all of the PUSCHs overlapping with the S PUCCHs in the time domain among the N PUSCHs, or the terminal device may discard or ignore part of the S PUCCHs and part of the PUSCHs overlapping with the S PUCCHs in the time domain among the N PUSCHs.

Optionally, the priority index associated with the PUCCH may be configured or indicated by the network device, and/or the priority index associated with the PUSCH may be configured or indicated by the network device.

In some embodiments, in a case where a priority of UCI information carried in an i-th PUCCH is higher than a priority of information carried in a PUSCH overlapping with the i-th PUCCH in a time domain among the N PUSCHs, the first uplink information does not include the PUSCH overlapping with the i-th PUCCH in the time domain among the N PUSCHs; and/or

in a case where the priority of the UCI information carried in the i-th PUCCH is lower than the priority of the information carried in the PUSCH overlapping with the i-th PUCCH in the time domain among the N PUSCHs, the first uplink information does not include the i-th PUCCH;

where the i-th PUCCH belongs to the S PUCCHs, i is a positive integer, and $1 \leq i \leq S$.

In some embodiments, in a case where a priority of UCI information carried in an i-th PUCCH is higher than a priority of information carried in a PUSCH overlapping with the i-th PUCCH in a time domain among the N PUSCHs, the terminal device discards or ignores the PUSCH overlapping with the i-th PUCCH in the time domain among the N PUSCHs; and/or

in a case where the priority of the UCI information carried in the i-th PUCCH is lower than the priority of the information carried in the PUSCH overlapping with the i-th PUCCH in the time domain among the N PUSCHs, the terminal device discards or ignores the i-th PUCCH;

where the i-th PUCCH belongs to the S PUCCHs, i is a positive integer, and $1 \leq i \leq S$.

That is, based on the priority of the UCI information carried in the PUCCH and the priority of the information carried in the PUSCH, the terminal device may discard or ignore a PUSCH or a PUCCH. As a specific example, the terminal device may discard or ignore all PUCCHs among the S PUCCHs, or the terminal device may discard or ignore all of the PUSCHs overlapping with the S PUCCHs in the time domain among the N PUSCHs, or the terminal device may discard or ignore part of the S PUCCHs and part of the PUSCHs overlapping with the S PUCCHs in the time domain among the N PUSCHs.

In some embodiments, the information carried in the PUSCH includes at least one of the following: hybrid automatic repeat request (HARQ), channel state information (CSI), and data.

In some embodiments, the UCI information carried in the PUCCH includes one or more of: HARQ information, CSI information, scheduling request (SR) information, or link recovery request (LRR).

In some embodiments, in a case where a priority index associated with an i-th PUCCH is the same as a priority index associated with a PUSCH overlapping with the i-th PUCCH in a time domain among the N PUSCHs, the terminal device determines a priority of the i-th PUCCH and a priority of the PUSCH overlapping with the i-th PUCCH in the time domain among the N PUSCHs based on content carried in the i-th PUCCH and content carried in the PUSCH overlapping with the i-th PUCCH in the time domain among the N PUSCHs, in which:

in a case where the priority of the i-th PUCCH is higher than the priority of the PUSCH overlapping with the i-th PUCCH in the time domain among the N PUSCHs, the first uplink information does not include the PUSCH overlapping with the i-th PUCCH in the time domain among the N PUSCHs; and/or in a case where the priority of the i-th PUCCH is lower than the priority of the PUSCH overlapping with the i-th PUCCH in the time domain among the N PUSCHs, the first uplink information does not include the i-th PUCCH;
where the i-th PUCCH belongs to the S PUCCHs, i is a positive integer, and $1 \leq i \leq S$.

In some embodiments, in a case where a priority index associated with an i-th PUCCH is the same as a priority index associated with a PUSCH overlapping with the i-th PUCCH in a time domain among the N PUSCHs, the terminal device determines a priority of the i-th PUCCH and a priority of the PUSCH overlapping with the i-th PUCCH in the time domain among the N PUSCHs based on content carried in the i-th PUCCH and content carried in the PUSCH overlapping with the i-th PUCCH in the time domain among the N PUSCHs, in which:

in a case where the priority of the i-th PUCCH is higher than the priority of the PUSCH overlapping with the i-th PUCCH in the time domain among the N PUSCHs, the terminal device discards or ignores the PUSCH overlapping with the i-th PUCCH in the time domain among the N PUSCHs; and/or in a case where the priority of the i-th PUCCH is lower than the priority of the PUSCH overlapping with the i-th PUCCH in the time domain among the N PUSCHs, the terminal device discards or ignores the i-th PUCCH;
where the i-th PUCCH belongs to the S PUCCHs, i is a positive integer, and $1 \leq i \leq S$.

In some embodiments, a priority of a PUCCH carrying at least one of hybrid automatic repeat request-acknowledgement (HARQ-ACK), a scheduling request (SR), and a link recovery request (LRR) is higher than a priority of a PUSCH carrying channel state information (CSI).

In some embodiments, a priority of a PUCCH carrying at least one of HARQ-ACK, an SR, and an LRR is higher than a priority of a PUSCH not carrying HARQ-ACK.

In some embodiments, a priority of a PUSCH carrying HARQ-ACK is higher than a priority of a PUCCH carrying CSI.

In some embodiments, a priority of a PUCCH carrying CSI is higher than a priority of a PUSCH not carrying CSI.

In some embodiments, a priority of a PUCCH carrying at least one of HARQ-ACK, an SR, and an LRR is higher than a priority of a PUSCH not carrying HARQ-ACK and CSI.

In some embodiments, a priority of a PUCCH carrying CSI is higher than a priority of a PUSCH carrying CSI.

In some embodiments, a priority of a PUSCH carrying HARQ-ACK is higher than a priority of a PUCCH carrying at least one of an SR and an LRR.

In some embodiments, a priority of a PUSCH carrying CSI is higher than a priority of a PUCCH carrying CSI.

In some embodiments, an order of priorities from highest to lowest is as follows:

highest priority: a PUCCH carrying HARQ-ACK and/or an SR, and/or an LRR having a higher priority; or a PUSCH carrying HARQ-ACK having a higher priority;
second highest priority: a PUCCH carrying CSI; or a PUSCH carrying CSI;
lowest priority: a PUSCH not carrying UCI information.

In a case where a terminal device communicates with multiple TRPs, a backhaul connection between the TRPs may be ideal or non-ideal. In ideal backhaul, information may be exchanged quickly and dynamically between the TRPs. That is, in an ideal backhaul scenario, transmission delay of information interaction is small. For example, the transmission delay of information interaction is less than a first preset value, where the first preset value is agreed upon by a protocol, or the first preset value is configured by a network device. Due to the large delay in non-ideal backhaul, information may only be exchanged quasi-statically between the TRPs. That is, in a non-ideal backhaul scenario, transmission delay of the information interaction is large. For example, the transmission delay of the information interaction is greater than a second preset value, where the second preset value is agreed upon by a protocol, or the second preset value is configured by the network device. Therefore, in these embodiments, in order to avoid the inability to exchange UCI information between the TRPs due to the non-ideal backhaul, a rule is formulated to enable normal transmission of PUCCH or PUSCH with a high priority.

In some embodiments, the terminal device transmits the first uplink information, and the first uplink information does not include at least one of the following: a PUCCH associated with a second target spatial parameter among the S PUCCHs, and a PUSCH associated with the second target spatial parameter among the PUSCHs overlapping with the S PUCCHs in a time domain among the N PUSCHs.

In some embodiments, the terminal device discards or ignores at least one of the following: a PUCCH associated with a second target spatial parameter among the S PUCCHs, and a PUSCH associated with the second target spatial parameter among the PUSCHs overlapping with the S PUCCHs in a time domain among the N PUSCHs.

That is, the terminal device may discard or ignore transmissions associated with specific spatial parameters (PUCCH and/or PUSCH).

In some embodiments, a transmission solution of the S PUCCHs is a single frequency network (SFN), and/or a transmission solution of the PUSCHs overlapping with the S PUCCHs in a time domain among the N PUSCHs is the SFN.

That is, in a case where a transmission solution of the S PUCCHs is an SFN, and/or a transmission solution of the PUSCHs overlapping with the S PUCCHs in a time domain among the N PUSCHs is an SFN, the first uplink information does not include at least one of the following: a PUCCH associated with the second target spatial parameter among the S PUCCHs, and a PUSCH associated with the second target spatial parameter among the PUSCHs overlapping with the S PUCCHs in the time domain among the N PUSCHs; or in a case where a transmission solution of the S PUCCHs is an SFN, and/or a transmission solution of the PUSCHs overlapping with the S PUCCHs in a time domain among the N PUSCHs is an SFN, the terminal device discards or ignores at least one of the following: a PUCCH associated with the second target spatial parameter among the S PUCCHs, and a PUSCH associated with the second target spatial parameter among the PUSCHs overlapping with the S PUCCHs in the time domain among the N PUSCHs.

In some embodiments, the second target spatial parameter is pre-defined (e.g., agreed upon by a protocol), or the second target spatial parameter is pre-configured (e.g., pre-configured or semi-statically configured), or the second target spatial parameter is configured by a network device (e.g., dynamically configured).

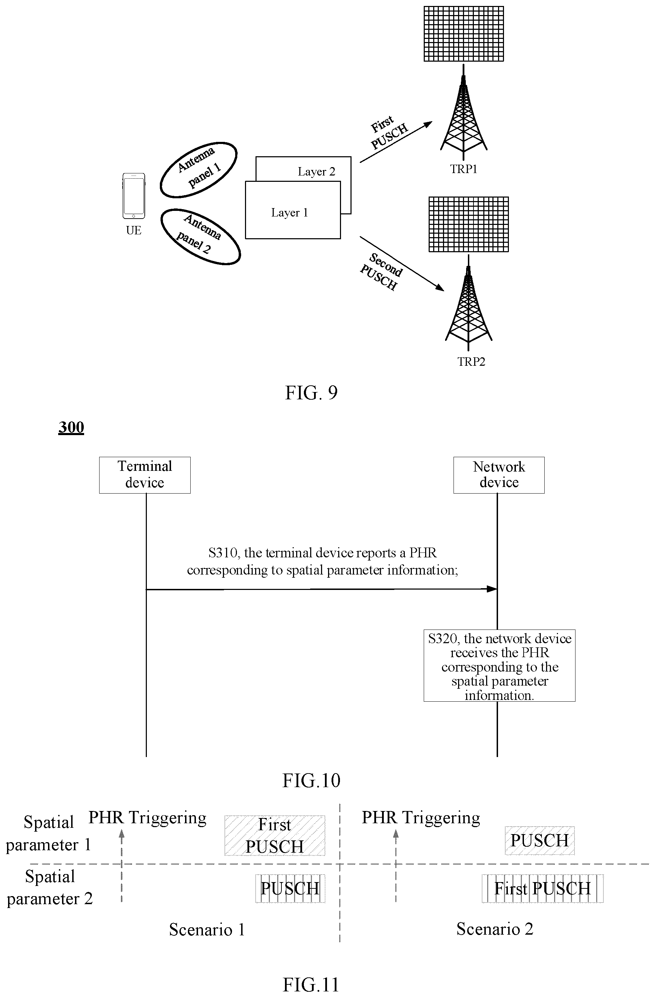

In some embodiments, in the SFN transmission solution, repeated transmissions of uplink information (such as PUCCH and/or PUSCH) are respectively associated with different spatial parameters. For example, one repeated transmission of the uplink information is associated with a first spatial parameter, and another repeated transmission of the uplink information is associated with a second spatial parameter. Specifically, taking the uplink information being a PUSCH and the spatial parameter being a TCI state as an example, as illustrated in FIG. 9, repeated transmissions of a single PUSCH are transmitted to different TRPs via different antenna panels of the terminal device. For example, the PUSCH transmitted via a panel 1 of the terminal device is associated with a first TCI state and is referred to as a first PUSCH; and the PUSCH transmitted via a panel 2 of the terminal device is associated with a second TCI state and is referred to as a second PUSCH.

Therefore, in these embodiments, in order to avoid the inability to exchange UCI information between TRPs due to non-ideal backhaul, a rule is formulated to enable discarding the PUCCH or PUSCH associated with the second target spatial parameter.

In some embodiments, in a case where an i-th PUCCH is a PUCCH repeatedly transmitted in a time domain, the first uplink information does not include a present transmission of the i-th PUCCH; and/or in a case where a PUSCH overlapping with the i-th PUCCH in the time domain among the N PUSCHs is a PUSCH repeatedly transmitted in the time domain, the first uplink information does not include a present transmission of the PUSCH overlapping with the i-th PUCCH in the time domain among the N PUSCHs;

where the i-th PUCCH belongs to the S PUCCHs, i is a positive integer, and $1 \leq i \leq S$.

In some embodiments, in a case where an i-th PUCCH is a PUCCH repeatedly transmitted in a time domain, the terminal device discards or ignores a present transmission of the i-th PUCCH; and/or in a case where a PUSCH overlapping with the i-th PUCCH in the time domain among the N PUSCHs is a PUSCH repeatedly transmitted in the time domain, the terminal device discards or ignores a present transmission of the PUSCH overlapping with the i-th PUCCH in the time domain among the N PUSCHs;

where the i-th PUCCH belongs to the S PUCCHs, i is a positive integer, and $1 \leq i \leq S$.

Therefore, in these embodiments, in order to avoid the inability to exchange UCI information between TRPs due to non-ideal backhaul, a rule is formulated to enable the PUCCH that is repeatedly transmitted in the time domain to discard the present transmission, and/or enable the PUSCH that is repeatedly transmitted in the time domain to discard the present transmission.

In some embodiments, in a case where a priority index associated with an i-th PUCCH is the same as a priority index associated with a PUSCH overlapping with the i-th PUCCH in a time domain among the N PUSCHs, and a transmission solution of the PUSCH overlapping with the i-th PUCCH in the time domain among the N PUSCHs is space division multiplexing (SDM), the first uplink information does not include the i-th PUCCH;

where the i-th PUCCH belongs to the S PUCCHs, i is a positive integer, and $1 \leq i \leq S$.

In some embodiments, in a case where a priority index associated with an i-th PUCCH is the same as a priority index associated with a PUSCH overlapping with the i-th PUCCH in a time domain among the N PUSCHs, and a transmission solution of the PUSCH overlapping with the i-th PUCCH in the time domain among the N PUSCHs is SDM, the terminal device discards or ignores the i-th PUCCH;

where the i-th PUCCH belongs to the S PUCCHs, i is a positive integer, and $1 \leq i \leq S$.

In some embodiments, SDM transmission solutions include an SDM transmission solution A and an SDM transmission solution B.

The SDM transmission solution A: different transmission layers of uplink information (such as PUCCH and/or PUSCH) are respectively associated with different spatial parameters. For example, part of the transmission layers of the uplink information are associated with the first spatial parameter, and another part of the transmission layers of the uplink information are associated with the second spatial parameter. Specifically, as illustrated in FIG. 9, taking the uplink information being the PUSCH and the spatial parameter being a TCI state in the SDM transmission solution A as an example, different transmission layers of a PUSCH may be transmitted to different TRPs via different panels of the terminal device. For example, different transmission layers transmitted to different TRPs via different panels may be considered as different PUSCHs. For example, part of the transmission layer of the PUSCH transmitted via a panel 1 is associated with a first TCI state and is referred to as a first PUSCH; and another part of the transmission layer of the PUSCH transmitted via a panel 2 is associated with a second TCI state and is referred to as a second PUSCH. It can be understood that the first PUSCH and the second PUSCH are different transmission layers of a same transmission block (TB).

The SDM transmission solution B: repeated transmissions of uplink information (such as PUCCH and/or PUSCH) (which may be different redundancy versions (RV)) are respectively associated with different spatial parameters. For example, one repeated transmission of the uplink information is associated with the first spatial parameter, and another repeated transmission of the uplink information is associated with the second spatial parameter. Specifically, as illustrated in FIG. 9, taking the uplink information being the PUSCH and the spatial parameter being a TCI state in the SDM transmission solution B as an example, repeated transmissions of a PUSCH are transmitted to different TRPs via different panels of the terminal device. For example, a PUSCH transmitted via a panel 1 of the terminal device is associated with a first TCI state and is referred to as a first PUSCH; and a PUSCH transmitted via a panel 2 of the UE is associated with a second TCI state and is referred to as a second PUSCH. It can be understood that the first PUSCH and the second PUSCH are repeated transmissions of a same TB.

In some embodiments, in a case where the first uplink information does not include a PUSCH overlapping with an i-th PUCCH in a time domain among the N PUSCHs, and UCI information carried in at least one PUCCH existing in the M PUCCHs is multiplexed onto the PUSCH overlapping with the i-th PUCCH in the time domain among the N PUSCHs for transmission, the first uplink information includes the i-th PUCCH and the at least one PUCCH;

where the i-th PUCCH belongs to the S PUCCHs, i is a positive integer, and $1 \leq i \leq S$.

In some embodiments, in a case where the terminal device discards or ignores a PUSCH overlapping with an i-th PUCCH in a time domain among the N PUSCHs, and UCI information carried in at least one PUCCH existing in the M PUCCHs is multiplexed onto the PUSCH overlapping with the i-th PUCCH in the time domain among the N PUSCHs for transmission, the terminal device transmits the i-th PUCCH and the at least one PUCCH;

where the i-th PUCCH belongs to the S PUCCHs, i is a positive integer, and $1 \leq i \leq S$.

Therefore, in these embodiments, it is avoided that the UCI information multiplexed onto the PUSCH cannot be transmitted due to the discard of the PUSCH.

In some embodiments, in a non-ideal backhaul scenario, the terminal device transmits the first uplink information.

In some embodiments, in a non-ideal backhaul scenario, the terminal device discards or ignores at least one of the following: part or all of the S PUCCHs, and part or all of the PUSCHs overlapping with the S PUCCHs in a time domain among the N PUSCHs.

It will be noted that in a case where a terminal device communicates with multiple TRPs, a backhaul connection between the TRPs may be ideal or non-ideal. In ideal backhaul, information may be exchanged quickly and dynamically between the TRPs. That is, in an ideal backhaul scenario, transmission delay of information interaction is small. For example, the transmission delay of information interaction is less than a first preset value, where the first preset value is agreed upon by a protocol, or the first preset value is configured by a network device. Due to the large delay in non-ideal backhaul, information may only be exchanged quasi-statically between the TRPs. That is, in a non-ideal backhaul scenario, transmission delay of the information interaction is large. For example, the transmission delay of the information interaction is greater than a second preset value, where the second preset value is agreed upon by a protocol, or the second preset value is configured by the network device. Therefore, in the non-ideal backhaul scenario, the terminal device discards or ignores at least one of the following: part or all of the S PUCCHs, and part or all of the PUSCHs overlapping with the S PUCCHs in a time domain among the N PUSCHs.

Therefore, in the embodiments of the present disclosure, the terminal device multiplexes the UCI information carried in the S PUCCHs onto the PUSCHs associated with the first target spatial parameter among the N PUSCHs, or the first uplink information transmitted by the terminal device does not include at least one of the following: part or all of the S PUCCHs, and part or all of the PUSCHs overlapping with the S PUCCHs in the time domain among the N PUSCHs. That is, for some PUCCHs that each has a conflict in the time domain and for which it is not possible to find a PUSCH associated with the same spatial parameter for multiplexing, the terminal device may multiplex the UCI information carried in the PUCCHs onto the PUSCHs associated with specific spatial parameters, or the terminal device may discard or ignore the PUCCHs, or the terminal device may discard or ignore the PUSCHs overlapping with the PUCCHs in the time domain, thereby optimizing the PUCCH transmission.

FIG. 10 is a schematic flowchart of a method 300 of wireless communication in accordance with embodiments of the present disclosure. As illustrated in FIG. 10, the method 300 of wireless communication may include at least part of the following contents.

In S310, a terminal device reports a PHR corresponding to spatial parameter information.

In S320, a network device receives the PHR corresponding to the spatial parameter information.

In the embodiments of the present disclosure, the terminal device may report the PHR corresponding to the spatial parameter information. For example, the terminal device reports a PHR corresponding to a first target spatial parameter in multiple spatial parameters, or the terminal device reports a respective PHR corresponding to each spatial parameter in the multiple spatial parameters, or the terminal device reports a total PHR corresponding to all spatial parameters in the multiple spatial parameters, so as to realize PHR reporting in a simultaneous transmission scenario of a multi-antenna panel.

The embodiments of the present disclosure may be applied to PHR reporting in a multi-panel simultaneous transmission scenario with multi-DCI scheduling.

It should be understood that the spatial parameter in the embodiments of the present disclosure may refer to a spatial setting or a spatial relation, etc., for transmission of uplink information (such as PUCCH and/or PUSCH).

In some embodiments of the present disclosure, the spatial parameter includes but is not limited to at least one of the following:

antenna panel information, TRP information, control resource set (CORESET) set information, transmission configuration indicator (TCI) state information, reference signal set information, reference signal information, beam information, and capability set information.

In some embodiments, the antenna panel information may include an identity (ID) or index of an antenna panel.

In some embodiments, the TRP information may include a TRP ID or a TRP index.

In some embodiments, the CORESET set information may include an ID or index of a CORESET set.

In some embodiments, the TCI state information may include a unified TCI state, or an uplink (UL) TCI state, or a joint TCI state.

In some embodiments, the reference signal set information may include at least one of the following: synchronization signal block (SSB) set information, channel state information reference signal (CSI-RS) resource set information, sounding reference signal (SRS) resource set information, and demodulation reference signal (DMRS) resource set information.

For example, the reference signal set information may include an index of a reference signal set, such as an index of an SSB set, or an index of a CSI-RS resource set, or an index of an SRS resource set, or an index of a DMRS resource set.

In some embodiments, the reference signal information may include at least one of the following: SSB information, CSI-RS resource information, SRS resource information, or DMRS resource information. For example, the reference signal information may be an index of an SRS resource, an index of an SSB resource, an index of a CSI-RS resource, and an index of a DMRS resource.

In some embodiments, the beam information may include a beam ID or a beam index.

In the embodiments of the present disclosure, the beam may also be referred to as a spatial domain transmission filter (or spatial domain filter for transmission), or a spatial domain reception filter (or spatial domain filter for reception), or a spatial reception (Rx) parameter.

In some embodiments, the capability set information may include one or more parameters. For example, the capability set information may be a capability set supported by the terminal device or reference signal information associated with the capability set supported by the terminal device.

In some embodiments, the capability set information includes but is not limited to at least one of the following: maximum number of SRS ports, maximum number of uplink transmission layers, codebook subset type, uplink full-power transmission mode, SRS antenna switching capability, SRS carrier switching capability, number of SRS resources transmitted simultaneously, maximum modulation mode for uplink data transmission, maximum modulation mode for downlink data transmission, number of hybrid automatic repeat request (HARQ) processes supported by the terminal device, channel bandwidth supported by the terminal device, number of transmission antennas supported by the terminal device, physical downlink shared channel (PDSCH) processing capability, PUSCH processing capability, power saving capability of the terminal device, coverage enhancement capability of the terminal device, data transmission rate improvement capability of the terminal device, short-delay processing capability of the terminal device, small data transmission capability of the terminal device, non-active data transmission capability of the terminal device, transmission reliability capability of the terminal device, and ultra-reliable and low latency communication (URLLC) data transmission capability of the terminal device.

In some embodiments, the uplink information (such as PUCCH and/or PUSCH) being associated with the TCI state information may include:

a transmission beam of the uplink information being determined based on the TCI state information.

In some embodiments, the uplink information (such as PUCCH and/or PUSCH) being associated with the antenna panel information may include:

the uplink information being transmitted via an antenna panel indicated by the antenna panel information.

In some embodiments, the uplink information (such as PUCCH and/or PUSCH) being associated with the TRP information may include:

the uplink information being transmitted to a TRP indicated by the TRP information.

In some embodiments, the uplink information (such as PUCCH and/or PUSCH) being associated with the CORESET set information may include:

a CORESET set indicated by the CORESET set information being a CORESET set to which a CORESET in which a physical downlink control channel (PDCCH) triggering the uplink information is located belongs, or being a CORESET set configured by higher layer signaling for resources to transmit the uplink information.

In some embodiments, the uplink information (such as PUCCH and/or PUSCH) being associated with the reference signal set information may include:

a reference signal set associated with an antenna panel used to transmit the uplink information, or a reference signal set configured by the network device for the uplink information, or a reference signal set associated with a PDCCH corresponding to the uplink information.

In some embodiments, the uplink information (such as PUCCH and/or PUSCH) being associated with the reference signal information may include:

a beam used to transmit the uplink information being determined based on a transmission beam of a reference signal indicated by the reference signal information, or being determined based on a reception beam of a reference signal indicated by the reference signal information.

In some embodiments, the uplink information (such as PUCCH and/or PUSCH) being associated with the beam information may include:

the uplink information being transmitted via a beam indicated by the beam information.

In some embodiments, the uplink information (such as PUCCH and/or PUSCH) being associated with the capability set information may include:

transmission parameters of the uplink information being determined based on the capability set information.

In some embodiments, the above S310 may specifically include:

reporting, by the terminal device, a PHR corresponding to a first target spatial parameter in multiple spatial parameters; or
reporting, by the terminal device, a respective PHR corresponding to each spatial parameter in the multiple spatial parameters; or
reporting, by the terminal device, a total PHR corresponding to all spatial parameters in the multiple spatial parameters.

In some embodiments, the multiple spatial parameters may be spatial parameters configured by the network device, or the multiple spatial parameters may be spatial parameters supported by the terminal device. For example, the multiple spatial parameters include a first spatial parameter and a second spatial parameter.

In some embodiments, the first target spatial parameter is pre-defined (e.g., agreed upon by a protocol), the first target spatial parameter is pre-configured (e.g., pre-configured or semi-statically configured), or the first target spatial parameter is configured by the network device (e.g., dynamically configured).

In some embodiments, in a case where the terminal device reports the PHR corresponding to the first target spatial parameter in the multiple spatial parameters, the PHR corresponding to the first target spatial parameter is carried via a first PUSCH;

where the first PUSCH is a PUSCH associated with the first target spatial parameter, or the first PUSCH is a PUSCH transmitted first in a time domain among respective PUSCHs associated with the multiple spatial parameters.

As a specific example, as illustrated in FIG. 11, the first target spatial parameter is a spatial parameter 1. In a scenario 1, the first PUSCH is a PUSCH associated with the spatial parameter 1. That is, in the scenario 1, a PHR corresponding to the spatial parameter 1 is carried via the PUSCH associated with the spatial parameter 1. In a scenario 2, the first PUSCH is a PUSCH transmitted first in the time domain among PUSCHs associated with the spatial parameter 1 and a spatial parameter 2 respectively. That is, in the scenario 2, since the PUSCH associated with the spatial parameter 2 is transmitted first in the time domain, the PHR corresponding to the spatial parameter 1 is carried via the PUSCH associated with the spatial parameter 2.

In some embodiments, the PHR corresponding to the first target spatial parameter is an actual PHR, or the PHR corresponding to the first target spatial parameter is a virtual PHR.

In some embodiments, in a case where scheduling information or configuration information corresponding to the PUSCH associated with the first target spatial parameter is earlier than a first time interval prior to a first symbol of the first PUSCH, the PHR corresponding to the first target spatial parameter is an actual PHR.

In some embodiments, the first time interval is a scheduling interval from a PDCCH to the PUSCH, or the first time interval is a processing time of the PUSCH.

In some embodiments, in a case where the PUSCH associated with the first target spatial parameter and the first PUSCH are transmitted in a same time unit, the PHR corresponding to the first target spatial parameter is an actual PHR. Optionally, the time unit may be one of the following: a time slot, a symbol, a subframe, a micro-time slot or mini-time slot, and an absolute time second (s) or millisecond (ms) or microsecond (μs).

In some embodiments, the first PUSCH is a dynamically scheduled PUSCH or a scheduling-free PUSCH.

In some embodiments, the PHR corresponding to the first target spatial parameter is calculated based on a power control parameter associated with the first target spatial parameter.

In some embodiments, in a case where the terminal device reports a respective PHR corresponding to each spatial parameter in the multiple spatial parameters, the respective PHR corresponding to each spatial parameter in the multiple spatial parameters is carried via a second PUSCH; or

in a case where the terminal device reports a total PHR corresponding to all spatial parameters in the multiple spatial parameters, the total PHR corresponding to all spatial parameters in the multiple spatial parameters is carried via a second PUSCH;

where the second PUSCH is a PUSCH associated with a second target spatial parameter in the multiple spatial parameters, or the second PUSCH is a PUSCH transmitted first in the time domain among the respective PUSCHs associated with the multiple spatial parameters.

In some embodiments, the second target spatial parameter is a spatial parameter whose associated PHR meets a trigger condition in the multiple spatial parameters. For example, in a case where the PHR associated with the first spatial parameter meets a trigger condition, the respective PHR corresponding to each spatial parameter is reported, or PHRs associated with all spatial parameters are reported and carried in a PUSCH associated with the first spatial parameter.

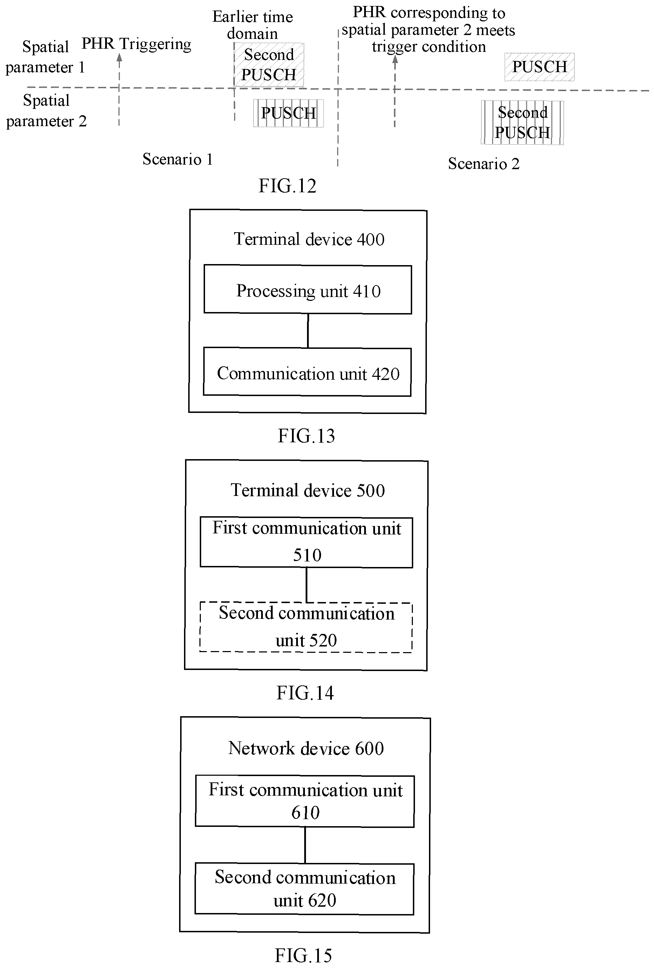

As a specific example, as illustrated in FIG. 12, in a scenario 1, a PUSCH associated with a spatial parameter 1 is transmitted first in a time domain, and a second PUSCH is the PUSCH associated with the spatial parameter 1. That is, in the scenario 1, a PHR corresponding to the spatial parameter 1 and a PHR corresponding to a spatial parameter 2 are carried via the PUSCH associated with the spatial parameter 1, or a total PHR corresponding to the spatial parameter 1 and the spatial parameter 2 is carried via the PUSCH associated with the spatial parameter 1. As illustrated in FIG. 12, in a scenario 2, a PHR associated with the spatial parameter 2 meets a trigger condition. That is, in the scenario 2, the second PUSCH is a PUSCH associated with the spatial parameter 2, and a PHR corresponding to the spatial parameter 1 and the PHR corresponding to the spatial parameter 2 are carried via the PUSCH associated with the spatial parameter 2, or a total PHR corresponding to the spatial parameter 1 and the spatial parameter 2 is carried via the PUSCH associated with the spatial parameter 2.

In some embodiments, the respective PHR corresponding to each spatial parameter in the multiple spatial parameters is an actual PHR, or the respective PHR corresponding to each spatial parameter in the multiple spatial parameters is a virtual PHR.

As a specific example, in a case where the terminal device reports the respective PHR corresponding to each spatial parameter in the multiple spatial parameters, assuming that the multiple spatial parameters include the first spatial parameter and the second spatial parameter, the PHR reported by the terminal device may include one of the following combinations:

{Actual PHR, Actual PHR},
{Virtual PHR, Virtual PHR},
{Actual PHR, Virtual PHR}, and
{Virtual PHR, Actual PHR}.

In some embodiments, in a case where the terminal device reports the total PHR corresponding to all spatial parameters in the multiple spatial parameters, the PHR reported by the terminal device may be one of the following: a total actual PHR, a total virtual PHR, and a total actual PHR + virtual PHR.

In some embodiments, in a case where scheduling information or configuration information corresponding to a PUSCH associated with an i-th spatial parameter is earlier than a first time interval prior to a first symbol of the second PUSCH, a PHR corresponding to the i-th spatial parameter is an actual PHR; where the i-th spatial parameter belongs to the multiple spatial parameters, and i is a positive integer.

In some embodiments, the first time interval is a scheduling interval from a PDCCH to the PUSCH, or the first time interval is a processing time of the PUSCH.

In some embodiments, in a case where a PUSCH associated with an i-th spatial parameter and the second PUSCH are transmitted in a same time unit, a PHR corresponding to the i-th spatial parameter is an actual PHR; where the i-th spatial parameter belongs to the multiple spatial parameters, and i is a positive integer. Optionally, the time unit may be one of the following: a time slot, a symbol, a subframe, a micro-time slot or mini-time slot, and an absolute time second (s) or millisecond (ms) or microsecond ($\mu$s).

In some embodiments, a PHR corresponding to an i-th spatial parameter is calculated based on a power control parameter associated with the i-th spatial parameter; where the i-th spatial parameter belongs to the multiple spatial parameters, and i is a positive integer.

In some embodiments, the second PUSCH is a dynamically scheduled PUSCH or a scheduling-free PUSCH.

In some embodiments, the terminal device receives first configuration information; where the first configuration information at least includes a PHR reporting method and/or PHR mode information, in which:

the PHR reporting method is reporting a PHR corresponding to the first target spatial parameter in the multiple spatial parameters, or the PHR reporting method is reporting a respective PHR corresponding to each spatial parameter in the multiple spatial parameters, or the PHR reporting method is reporting a total PHR corresponding to all spatial parameters in the multiple spatial parameters; and

the PHR mode information is used to indicate that configuration information of the PHR corresponding to the first target spatial parameter is effective, or the PHR mode information is used to indicate that pieces of configuration information of the PHRs corresponding to the multiple spatial parameters are all effective.

In some embodiments, the first configuration information is configuration information of a PHR transmitted by the network device.

In some embodiments, the first configuration information is carried via at least one of the following: radio resource control (RRC) signaling, downlink control information (DCI), and media access control control element (MAC CE) signaling.

In some embodiments, after receiving the first configuration information, the terminal device determines to trigger PHR reporting.

As a specific example, in a case where the terminal device reports a PHR corresponding to the first target spatial parameter in the multiple spatial parameters, the terminal device determines to trigger PHR reporting, which can be understood that the terminal device determines to trigger PHR reporting corresponding to the first target spatial parameter.

As a specific example, in a case where the terminal device reports a respective PHR corresponding to each spatial parameter in the multiple spatial parameters, the terminal device determines to trigger PHR reporting, which can be understood that the terminal device determines to trigger PHR reporting corresponding to any spatial parameter.

As a specific example, in a case where the terminal device reports a total PHR corresponding to all spatial parameters in the multiple spatial parameters, the terminal device determines to trigger PHR reporting, which can be understood that the terminal device determines to trigger PHR reporting corresponding to any spatial parameter, or the terminal device determines to trigger PHR reporting corresponding to all spatial parameters.

In some embodiments, in a case where the first configuration information at least includes the PHR reporting method, the above S310 may specifically include: reporting, by the terminal device, a PHR corresponding to spatial parameter information based on the PHR reporting method.

In some embodiments, the PHR reporting method is determined based on capability information of the terminal device; where the capability information of the terminal device includes a PHR reporting method supported by the terminal device, in which: the PHR reporting method supported by the terminal device includes at least one of the following: reporting a PHR corresponding to the first target spatial parameter in the multiple spatial parameters, reporting a respective PHR corresponding to each spatial parameter in the multiple spatial parameters, and reporting a total PHR corresponding to all spatial parameters in the multiple spatial parameters.

As a specific example, in a case where the terminal device at least supports reporting the PHR corresponding to the first target spatial parameter in the multiple spatial parameters, the PHR reporting method indicated by the network device in the first configuration information is reporting the PHR corresponding to the first target spatial parameter in the multiple spatial parameters.

For another specific example, in a case where the terminal device at least supports reporting a respective PHR corresponding to each spatial parameter in multiple spatial parameters, the PHR reporting method indicated by the network device in the first configuration information is reporting the respective PHR corresponding to each spatial parameter in the multiple spatial parameters.

For yet another specific example, in a case where the terminal device at least supports reporting a total PHR corresponding to all spatial parameters in the multiple spatial parameters, the PHR reporting method indicated by the network device in the first configuration information is reporting the total PHR corresponding to all spatial parameters in the multiple spatial parameters.

In some embodiments, in a case where first configuration information at least includes the PHR mode information, the above S310 may specifically include:

reporting, by the terminal device, a PHR corresponding to the first target spatial parameter in the multiple spatial parameters, in a case where the PHR mode information is used to indicate that configuration information of the PHR corresponding to the first target spatial parameter is effective; and/or

reporting, by the terminal device, a respective PHR corresponding to each spatial parameter in the multiple spatial parameters, or reporting, by the terminal device, a total PHR corresponding to all spatial parameters in the multiple spatial parameters, in a case where the PHR mode information is used to indicate that pieces of configuration information of the PHRs corresponding to the multiple spatial parameters are all effective.

In some embodiments, the PHR mode information is an RRC parameter *twoPHRMode.* The RRC parameter *twoPHRMode,* when not configured to be enabled, is used to indicate that configuration information of a PHR corresponding to the first target spatial parameter is effective; and the RRC parameter *twoPHRMode,* when configured to be enabled, is used to indicate that pieces of configuration information of the PHRs corresponding to the multiple spatial parameters are all effective.

In some embodiments, the first configuration information further includes at least one of the following: a PHR periodic timer (*phr-PeriodicTimer*), a PHR report prohibit timer (*phr-ProhibitTimer*), a PHR transmission power factor change (*phr-Tx-PowerFactorChange*) or path loss change, a PHR mode of another cell group (*phr-ModeOtherCG*) in dual connection, a multi-cell PHR or single-cell PHR, a maximum permissible exposure (MPE) reporting permission (*mpe-Reporting-FR2*), a power management maximum power reduction (P-MPR) threshold (*mpe-Threshold*), and an MPE report prohibit timer (*mpe-ProhibitTimer*).

Therefore, in the embodiments of the present disclosure, the terminal device may report a PHR corresponding to spatial parameter information. For example, the terminal device reports a PHR corresponding to the first target spatial parameter in multiple spatial parameters, or the terminal device reports a respective PHR corresponding to each spatial parameter in the multiple spatial parameters, or the terminal device reports a total PHR corresponding to all spatial parameters in the multiple spatial parameters, so as to realize PHR reporting in a multi-panel simultaneous transmission scenario.

The method embodiments of the present disclosure are described above in detail in combination with FIG. 8 to FIG. 12. The apparatus embodiments of the present disclosure are described below in detail in combination with FIG. 13 to FIG. 18. It should be understood that the apparatus embodiments and the method embodiments correspond to each other, and similar descriptions in the apparatus embodiments may refer to that of the method embodiments.

FIG. 13 illustrates a schematic block diagram of a terminal device 400 in accordance with embodiments of the present disclosure. As illustrated in FIG. 13, the terminal device 400 includes a processing unit 410 and a communication unit 420.

The processing unit 410 is configured to multiplex uplink control information (UCI) information carried in P physical uplink control channels (PUCCHs) among M PUCCHs onto physical uplink shared channels (PUSCHs) associated with same spatial parameters as the P PUCCHs among N PUSCHs, where the M PUCCHs overlap with the N PUSCHs in a time domain, and after multiplexing, S PUCCHs existing in the M PUCCHs overlap with the PUSCHs among the N PUSCHs in the time domain, M, N, P and S are all positive integers, and S = M-P.

The processing unit 410 is further configured to multiplex UCI information carried in the S PUCCHs onto PUSCHs associated with a first target spatial parameter among the N PUSCHs; or the communication unit 420 is configured to transmit first uplink information, where the first uplink information does not include at least one of the following: part or all of the S PUCCHs, and part or all of the PUSCHs overlapping with the S PUCCHs in the time domain among the N PUSCHs.

In some embodiments, the processing unit 410 is specifically configured to:
multiplex the UCI information carried in the S PUCCHs onto the PUSCHs associated with the first target spatial parameter among the N PUSCHs in an ideal backhaul scenario.

In some embodiments, the first target spatial parameter is pre-defined, or the first target spatial parameter is pre-configured, or the first target spatial parameter is configured by a network device.

In some embodiments, the communication unit 420 is specifically configured to:

transmit the first uplink information based on a priority order.

In some embodiments, the communication unit 420 is configured to:

in a case where a priority index associated with an i-th PUCCH is higher than a priority index associated with a PUSCH overlapping with the i-th PUCCH in a time domain among the N PUSCHs, transmit the first uplink information, the first uplink information not including the PUSCH overlapping with the i-th PUCCH in the time domain among the N PUSCHs; and/or

in a case where the priority index associated with the i-th PUCCH is lower than the priority index associated with the PUSCH overlapping with the i-th PUCCH in the time domain among the N PUSCHs, transmit the first uplink information, the first uplink information not including the i-th PUCCH;

where the i-th PUCCH belongs to the S PUCCHs, i is a positive integer, and $1 \leq i \leq S$.

In some embodiments, the communication unit 420 is specifically configured to:

in a case where a priority of uplink control information (UCI) information carried in an i-th PUCCH is higher than a priority of information carried in a PUSCH overlapping with the i-th PUCCH in a time domain among the N PUSCHs, transmit the first uplink information, the first uplink information not including the PUSCH overlapping with the i-th PUCCH in the time domain among the N PUSCHs; and/or

in a case where the priority of the UCI information carried in the i-th PUCCH is lower than the priority of the information carried in the PUSCH overlapping with the i-th PUCCH in the time domain among the N PUSCHs, transmit the first uplink information, the first uplink information not including the i-th PUCCH;

where the i-th PUCCH belongs to the S PUCCHs, i is a positive integer, and $1 \leq i \leq S$.

In some embodiments, in a case where a priority index associated with an i-th PUCCH is the same as a priority index associated with a PUSCH overlapping with the i-th PUCCH in a time domain among the N PUSCHs, the processing unit 410 is further configured to determine a priority of the i-th PUCCH and a priority of the PUSCH overlapping with the i-th PUCCH in the time domain among the N PUSCHs based on content carried in the i-th PUCCH and content carried in the PUSCH overlapping with the i-th PUCCH in the time domain among the N PUSCHs.

The communication unit 420 is specifically configured to:

in a case where the priority of the i-th PUCCH is higher than the priority of the PUSCH overlapping with the i-th PUCCH in the time domain among the N PUSCHs, transmit the first uplink information, the first uplink information not including the PUSCH overlapping with the i-th PUCCH in the time domain among the N PUSCHs; and/or

in a case where the priority of the i-th PUCCH is lower than the priority of the PUSCH overlapping with the i-th PUCCH in the time domain among the N PUSCHs, transmit the first uplink information, the first uplink information not including the i-th PUCCH;

where the i-th PUCCH belongs to the S PUCCHs, i is a positive integer, and $1 \leq i \leq S$.

In some embodiments, a priority of a PUCCH carrying at least one of hybrid automatic repeat request-acknowledgement (HARQ-ACK), a scheduling request (SR), and a link recovery request (LRR) is higher than a priority of a PUSCH carrying channel state information (CSI); and/or

a priority of a PUCCH carrying at least one of HARQ-ACK, an SR, and an LRR is higher than a priority of a PUSCH not carrying HARQ-ACK; and/or

a priority of a PUSCH carrying HARQ-ACK is higher than a priority of a PUCCH carrying CSI; and/or

a priority of a PUCCH carrying CSI is higher than a priority of a PUSCH not carrying CSI; and/or

a priority of a PUCCH carrying at least one of HARQ-ACK, an SR, and an LRR is higher than a priority of a PUSCH not carrying HARQ-ACK and CSI; and/or

a priority of a PUCCH carrying CSI is higher than a priority of a PUSCH carrying CSI; and/or

a priority of a PUSCH carrying HARQ-ACK is higher than a priority of a PUCCH carrying at least one of an SR and an LRR.

In some embodiments, the communication unit 420 is specifically configured to:

transmit the first uplink information, the first uplink information not including at least one of the following: a PUCCH associated with a second target spatial parameter among the S PUCCHs, and a PUSCH associated with the second target spatial parameter among the PUSCHs overlapping with the S PUCCHs in a time domain among the N PUSCHs.

In some embodiments, a transmission solution of the S PUCCHs is a single frequency network (SFN), and/or a transmission solution of the PUSCHs overlapping with the S PUCCHs in a time domain among the N PUSCHs is the SFN.

In some embodiments, the second target spatial parameter is pre-defined, or the second target spatial parameter is pre-configured, or the second target spatial parameter is configured by a network device.

In some embodiments, the communication unit 420 is specifically configured to:

in a case where an i-th PUCCH is a PUCCH repeatedly transmitted in a time domain, discard a present transmission of the i-th PUCCH; and/or in a case where a PUSCH overlapping with the i-th PUCCH in the time domain among the N PUSCHs is a PUSCH repeatedly transmitted in the time domain, transmit the first uplink information, the first uplink information not including a present transmission of the PUSCH overlapping with the i-th PUCCH in the time domain among the N PUSCHs;

where the i-th PUCCH belongs to the S PUCCHs, i is a positive integer, and $1 \leq i \leq S$.

In some embodiments, the communication unit 420 is specifically configured to:

in a case where a priority index associated with an i-th PUCCH is the same as a priority index associated with a PUSCH overlapping with the i-th PUCCH in a time domain among the N PUSCHs, and a transmission solution of the PUSCH overlapping with the i-th PUCCH in the time domain among the N PUSCHs is space division multiplexing (SDM), transmit the first uplink information, the first uplink information not including the i-th PUCCH;

where the i-th PUCCH belongs to the S PUCCHs, i is a positive integer, and $1 \leq i \leq S$.

In some embodiments, in a case where the first uplink information does not include a PUSCH overlapping with an i-th PUCCH in a time domain among the N PUSCHs, and UCI information carried in at least one PUCCH existing in the M PUCCHs is multiplexed onto the PUSCH overlapping with the i-th PUCCH in the time domain among the N PUSCHs for transmission, the first uplink information at least includes the i-th PUCCH and the at least one PUCCH;

where the i-th PUCCH belongs to the S PUCCHs, i is a positive integer, and $1 \leq i \leq S$.

In some embodiments, the communication unit 420 is specifically configured to:

transmit the first uplink information in a non-ideal backhaul scenario.

In some embodiments, the N PUSCHs include at least one of the following: a dynamically scheduled PUSCH, and a scheduling-free PUSCH.

In some embodiments, the M PUCCHs and the N PUSCHs meet a timing condition for UCI information multiplexing.

In some embodiments, the M PUCCHs and the N PUSCHs are located in a same time unit. Optionally, the time unit is one of the following: a time slot, a mini-slot, multiple symbols, a subframe, and a transmission occasion.

In some embodiments, the communication unit may be a communication interface or a transceiver, or an input/output interface of a communication chip or a system on chip. The processing unit mentioned above may be one or more processors.

It should be understood that the terminal device 400 in accordance with the embodiments of the present disclosure may correspond to the terminal device in the method embodiments of the present disclosure, and the above and other operations and/or functions of various units in the terminal device 400 are respectively for realizing the corresponding processes of the terminal device in the method 200 illustrated in FIG. 8, which will not be repeated here for the sake of brevity.

FIG. 14 illustrates a schematic block diagram of a terminal device 500 in accordance with embodiments of the present disclosure. As illustrated in FIG. 14, the terminal device 500 includes:

a first communication unit 510, configured to report a power headroom report (PHR) corresponding to spatial parameter information.

In some embodiments, the first communication unit 510 is specifically configured to:

report a PHR corresponding to a first target spatial parameter in multiple spatial parameters; or
report a respective PHR corresponding to each spatial parameter in the multiple spatial parameters; or
report a total PHR corresponding to all spatial parameters in the multiple spatial parameters.

In some embodiments, in a case where the terminal device reports the PHR corresponding to the first target spatial parameter in the multiple spatial parameters, the PHR corresponding to the first target spatial parameter is carried via a first physical uplink shared channel (PUSCH);

where the first PUSCH is a PUSCH associated with the first target spatial parameter, or the first PUSCH is a PUSCH transmitted first in the time domain among the respective PUSCHs associated with the multiple spatial parameters.

In some embodiments, the PHR corresponding to the first target spatial parameter is an actual PHR, or the PHR corresponding to the first target spatial parameter is a virtual PHR.

In some embodiments, in a case where scheduling information or configuration information corresponding to the PUSCH associated with the first target spatial parameter is earlier than a first time interval prior to a first symbol of the first PUSCH, the PHR corresponding to the first target spatial parameter is the actual PHR; or

in a case where the PUSCH associated with the first target spatial parameter and the first PUSCH are transmitted in a same time unit, the PHR corresponding to the first target spatial parameter is the actual PHR.

In some embodiments, the first PUSCH is a dynamically scheduled PUSCH or a scheduling-free PUSCH.

In some embodiments, the PHR corresponding to the first target spatial parameter is calculated based on a power control parameter associated with the first target spatial parameter.

In some embodiments, the first target spatial parameter is pre-defined, or the first target spatial parameter is pre-configured, or the first target spatial parameter is configured by a network device.

In some embodiments, in a case where the terminal device reports a respective PHR corresponding to each spatial parameter in multiple spatial parameters, the respective PHR corresponding to each spatial parameter in the multiple spatial parameters is carried via a second PUSCH; or

in a case where the terminal device reports a total PHR corresponding to all spatial parameters in the multiple spatial parameters, the total PHR corresponding to all spatial parameters in the multiple spatial parameters is carried via a second PUSCH;

where the second PUSCH is a PUSCH associated with a second target spatial parameter in the multiple spatial parameters, or the second PUSCH is a PUSCH transmitted first in the time domain among the respective PUSCHs associated with the multiple spatial parameters.

In some embodiments, the second target spatial parameter is a spatial parameter whose associated PHR meets a trigger condition in the multiple spatial parameters.

In some embodiments, the respective PHR corresponding to each spatial parameter in the multiple spatial parameters is an actual PHR, or the respective PHR corresponding to each spatial parameter in the multiple spatial parameters is a virtual PHR.

In some embodiments, in a case where scheduling information or configuration information corresponding to a PUSCH associated with an i-th spatial parameter is earlier than a first time interval prior to a first symbol of the second PUSCH, a PHR corresponding to the i-th spatial parameter is an actual PHR; or

in a case where a PUSCH associated with an i-th spatial parameter and the second PUSCH are transmitted in a same time unit, a PHR corresponding to the i-th spatial parameter is an actual PHR;

where the i-th spatial parameter belongs to the multiple spatial parameters, and i is a positive integer.

In some embodiments, a PHR corresponding to an i-th spatial parameter is calculated based on a power control parameter associated with the i-th spatial parameter;

where the i-th spatial parameter belongs to the multiple spatial parameters, and i is a positive integer.

In some embodiments, the second PUSCH is a dynamically scheduled PUSCH or a scheduling-free PUSCH.

In some embodiments, the first time interval is a scheduling interval from a physical downlink control channel (PDCCH) to the PUSCH, or the first time interval is a processing time of the PUSCH.

In some embodiments, the terminal device 500 further includes a second communication unit 520.

The second communication unit 520 is configured to receive first configuration information;

where the first configuration information at least includes a PHR reporting method and/or PHR mode information, in which:

the PHR reporting method is reporting a PHR corresponding to the first target spatial parameter in the multiple spatial parameters, or the PHR reporting method is reporting a respective PHR corresponding to each spatial parameter in the multiple spatial parameters, or the PHR reporting method is reporting a total PHR corresponding to all spatial parameters in the multiple spatial parameters; and

the PHR mode information is used to indicate that configuration information of the PHR corresponding to the first target spatial parameter is effective, or the PHR mode information is used to indicate that pieces of configuration information of the PHRs corresponding to the multiple spatial parameters are all effective.

In some embodiments, in a case where the first configuration information at least includes the PHR reporting method, the communication unit 510 is specifically configured to:

report a PHR corresponding to spatial parameter information based on the PHR reporting method.

In some embodiments, the PHR reporting method is determined based on capability information of the terminal device;

where the capability information of the terminal device includes a PHR reporting method supported by the terminal device, in which:

the PHR reporting method supported by the terminal device includes at least one of the following: reporting a PHR corresponding to the first target spatial parameter in multiple spatial parameters, reporting a respective PHR corresponding to each spatial parameter in the multiple spatial parameters, and reporting a total PHR corresponding to all spatial parameters in the multiple spatial parameters.

In some embodiments, in a case where the first configuration information at least includes the PHR mode information, the communication unit 510 is specifically configured to:

report a PHR corresponding to the first target spatial parameter in the multiple spatial parameters, in a case where the PHR mode information is used to indicate that configuration information of the PHR corresponding to the first target spatial parameter is effective; and/or

report a respective PHR corresponding to each spatial parameter in the multiple spatial parameters, or report a total PHR corresponding to all spatial parameters in the multiple spatial parameters, in a case where the PHR mode information is used to indicate that pieces of configuration information of the PHRs corresponding to the multiple spatial parameters are all effective.

In some embodiments, the PHR mode information is an RRC parameter *twoPHRMode.* The RRC parameter *twoPHRMode,* when not configured to be enabled, is used to indicate that configuration information of the PHR corresponding to the first target spatial parameter is effective; and the RRC parameter *twoPHRMode,* when configured to be enabled, is used to indicate that pieces of configuration information of the PHRs corresponding to the multiple spatial parameters are all effective.

In some embodiments, the first configuration information further includes at least one of the following:

a PHR periodic timer, a PHR report prohibit timer, a PHR transmission power factor change or path loss change, a PHR mode of another cell group in dual connection, a multi-cell PHR or single-cell PHR, a maximum permissible exposure (MPE) reporting permission, a power management maximum power reduction (P-MPR) threshold, and an MPE report prohibit timer.

In some embodiments, the communication unit may be a communication interface or a transceiver, or an input/output interface of a communication chip or a system on chip.

It should be understood that the terminal device 500 in accordance with the embodiments of the present disclosure may correspond to the terminal device in the method embodiments of the present disclosure, and the above and other operations and/or functions of various units in the terminal device 500 are respectively for realizing the corresponding processes of the terminal device in the method 300 illustrated in FIG. 10, which will not be repeated here for the sake of brevity.

FIG. 15 illustrates a schematic block diagram of a network device 600 in accordance with embodiments of the present disclosure. As illustrated in FIG. 15, the network device 600 includes:

a first communication unit 610, configured to receive a power headroom report (PHR) corresponding to spatial parameter information.

In some embodiments, the first communication unit 610 is specifically configured to:

receive a PHR corresponding to a first target spatial parameter in multiple spatial parameters; or

receive a respective PHR corresponding to each spatial parameter in the multiple spatial parameters; or

receive a total PHR corresponding to all spatial parameters in the multiple spatial parameters.

In some embodiments, in a case where the network device receives a PHR corresponding to a first target spatial parameter in multiple spatial parameters, the PHR corresponding to the first target spatial parameter is carried via a first physical uplink shared channel (PUSCH);

where the first PUSCH is a PUSCH associated with the first target spatial parameter, or the first PUSCH is a PUSCH transmitted first in the time domain among respective PUSCHs associated with the multiple spatial parameters.

In some embodiments, the PHR corresponding to the first target spatial parameter is an actual PHR, or the PHR corresponding to the first target spatial parameter is a virtual PHR.

In some embodiments, in a case where scheduling information or configuration information corresponding to the PUSCH associated with the first target spatial parameter is earlier than a first time interval prior to a first symbol of the first PUSCH, the PHR corresponding to the first target spatial parameter is an actual PHR; or

in a case where the PUSCH associated with the first target spatial parameter and the first PUSCH are transmitted in a same time unit, the PHR corresponding to the first target spatial parameter is an actual PHR.

In some embodiments, the first PUSCH is a dynamically scheduled PUSCH or a scheduling-free PUSCH.

In some embodiments, the PHR corresponding to the first target spatial parameter is calculated based on a power control parameter associated with the first target spatial parameter.

In some embodiments, the first target spatial parameter is pre-defined, or the first target spatial parameter is pre-configured, or the first target spatial parameter is configured by the network device.

In some embodiments, in a case where the network device receives the respective PHR corresponding to each spatial parameter in the multiple spatial parameters, the respective PHR corresponding to each spatial parameter in the multiple spatial parameters is carried via a second PUSCH; or

in a case where the network device receives a total PHR corresponding to all spatial parameters in the multiple spatial parameters, the total PHR corresponding to all spatial parameters in the multiple spatial parameters is carried via a second PUSCH;

where the second PUSCH is a PUSCH associated with a second target spatial parameter in the multiple spatial parameters, or the second PUSCH is a PUSCH transmitted first in the time domain among the respective PUSCHs associated with the multiple spatial parameters.

In some embodiments, the second target spatial parameter is a spatial parameter whose associated PHR meets a trigger condition in the multiple spatial parameters.

In some embodiments, the respective PHR corresponding to each spatial parameter in the multiple spatial parameters is an actual PHR, or the respective PHR corresponding to each spatial parameter in the multiple spatial parameters is a virtual PHR.

In some embodiments, in a case where scheduling information or configuration information corresponding to a PUSCH associated with an i-th spatial parameter is earlier than a first time interval prior to a first symbol of the second PUSCH, a PHR corresponding to the i-th spatial parameter is an actual PHR; or

in a case where a PUSCH associated with an i-th spatial parameter and the second PUSCH are transmitted in a same time unit, a PHR corresponding to the i-th spatial parameter is an actual PHR;

where the i-th spatial parameter belongs to the multiple spatial parameters, and i is a positive integer.

In some embodiments, a PHR corresponding to an i-th spatial parameter is calculated based on a power control parameter associated with the i-th spatial parameter;

where the i-th spatial parameter belongs to the multiple spatial parameters, and i is a positive integer.

In some embodiments, the second PUSCH is a dynamically scheduled PUSCH or a scheduling-free PUSCH.

In some embodiments, the first time interval is a scheduling interval from a physical downlink control channel (PDCCH) to the PUSCH, or the first time interval is a processing time of the PUSCH.

In some embodiments, the network device 600 further includes a second communication unit 620.

The second communication unit 620 is configured to transmit first configuration information;

where the first configuration information at least includes a PHR reporting method and/or PHR mode information, in which:

the PHR reporting method is reporting a PHR corresponding to the first target spatial parameter in the multiple spatial parameters, or the PHR reporting method is reporting a respective PHR corresponding to each spatial parameter in the multiple spatial parameters, or the PHR reporting method is reporting a total PHR corresponding to all spatial parameters in the multiple spatial parameters; and

the PHR mode information is used to indicate that configuration information of the PHR corresponding to the first target spatial parameter is effective, or the PHR mode information is used to indicate that pieces of configuration information of the PHRs corresponding to the multiple spatial parameters are all effective.

In some embodiments, in a case where the first configuration information at least includes the PHR reporting method, the PHR corresponding to the spatial parameter information received by the network device is transmitted based on the PHR reporting method.

In some embodiments, the PHR reporting method is determined based on capability information of the terminal device;

where the capability information of the terminal device includes a PHR reporting method supported by the terminal device, in which:

where the PHR reporting method supported by the terminal device includes at least one of the following: reporting a PHR corresponding to the first target spatial parameter in the multiple spatial parameters, reporting a respective PHR corresponding to each spatial parameter in the multiple spatial parameters, and reporting a total PHR corresponding to all spatial parameters in the multiple spatial parameters.

In some embodiments, in a case where the first configuration information at least includes the PHR mode information, the second communication unit 610 is specifically configured to:

receive a PHR corresponding to the first target spatial parameter in the multiple spatial parameters, in a case where the PHR mode information is used to indicate that configuration information of the PHR corresponding to the first target spatial parameter is effective; and/or

receive a respective PHR corresponding to each spatial parameter in the multiple spatial parameters, or receive a total PHR corresponding to all spatial parameters in the multiple spatial parameters, in a case where the PHR mode information is used to indicate that pieces of configuration information of the PHRs corresponding to the multiple spatial parameters are all effective.

In some embodiments, the PHR mode information is an RRC parameter *twoPHRMode,* the RRC parameter *twoPHRMode,* when not configured to be enabled, is used to indicate that configuration information of the PHR corresponding to the first target spatial parameter is effective, and the RRC parameter *twoPHRMode,* when configured to be enabled, is used to indicate that piece of configuration information of the PHRs corresponding to the multiple spatial parameters are all effective.

In some embodiments, the first configuration information further includes at least one of the following: a PHR periodic timer, a PHR report prohibit timer, a PHR transmission power factor change or path loss change, a PHR mode of another cell group in dual connection, a multi-cell PHR or single-cell PHR, a maximum permissible exposure (MPE) reporting permission, a power management maximum power reduction (P-MPR) threshold, and an MPE report prohibit timer.

In some embodiments, the communication unit may be a communication interface or a transceiver, or an input/output interface of a communication chip or a system on chip.

It should be understood that the network device 600 in accordance with the embodiments of the present disclosure may correspond to the network device in the method embodiments of the present disclosure, and the above and other operations and/or functions of various units in the network device 600 are respectively for realizing the corresponding processes of the network device in the method 300 illustrated in FIG. 10, which will not be repeated here for the sake of brevity.

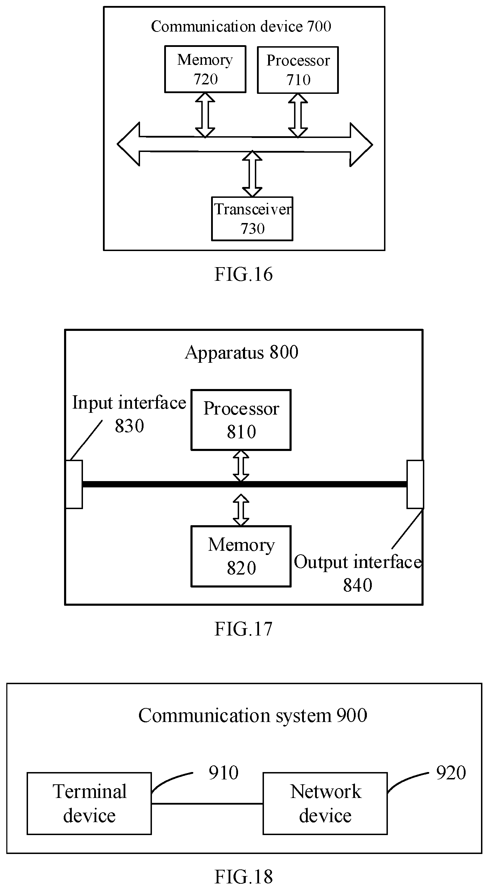

FIG. 16 is a schematic structural diagram of a communication device 700 provided in embodiments of the present disclosure. The communication device 700 illustrated in FIG. 16 includes a processor 710. The processor 710 may call a computer program from a memory and run the computer program, to implement the methods in the embodiments of the present disclosure.

In some embodiments, as illustrated in FIG. 16, the communication device 700 may further include a memory 720. The processor 710 may call a computer program from the memory 720 and run the computer program, to implement the methods in the embodiments of the present disclosure.

Here, the memory 720 may be a separate device independent of the processor 710, or may be integrated into the processor 710.

In some embodiments, as illustrated in FIG. 16, the communication device 700 may further include a transceiver 730, and the processor 710 may control the transceiver 730 to communicate with other devices. Specifically, the processor 710 may control the transceiver 730 to transmit information or data to other devices, or receive information or data transmitted by other devices.

Here, the transceiver 730 may include a transmitter and a receiver. The transceiver 730 may further include an antenna, and the number of the antenna may be one or more.

In some embodiments, the processor 710 may implement the functions of a processing unit in a terminal device, or the processor 710 may implement the functions of a processing unit in a network device, which will not be repeated here for the sake of brevity.

In some embodiments, the transceiver 730 may implement the functions of a communication unit in a terminal device, which will not be repeated here for the sake of brevity.

In some embodiments, the transceiver 730 may implement the function of a communication unit in a network device, which will not be repeated here for the sake of brevity.

In some embodiments, the communication device 700 may specifically be a network device in the embodiments of the present disclosure, and the communication device 700 may implement the corresponding processes implemented by the network device in various methods of the embodiments of the present disclosure, which will not be repeated here for the sake of brevity.

In some embodiments, the communication device 700 may specifically be a terminal device of the embodiments of the present disclosure, and the communication device 700 may implement the corresponding processes implemented by the terminal device in various methods of the embodiments of the present disclosure, which will not be repeated here for the sake of brevity.

FIG. 17 is a schematic structural diagram of an apparatus in accordance with embodiments of the present disclosure. The apparatus 800 illustrated in FIG. 17 includes a processor 810, and the processor 810 may call a computer program from a memory and run the computer program, to implement the methods in the embodiments of the present disclosure.

In some embodiments, as illustrated in FIG. 17, the apparatus 800 may further include a memory 820. The processor 810 may call a computer program from the memory 820 and run the computer program, to implement the methods in the embodiments of the present disclosure.

The memory 820 may be a separate device independent of the processor 810, or may be integrated into the processor 810.

In some embodiments, the apparatus 800 may further include an input interface 830. The processor 810 may control the input interface 830 to communicate with other devices or chips. Specifically, the processor 810 may control the input interface 830 to acquire information or data transmitted by other devices or chips. Optionally, the processor 810 may be located on a chip or off a chip.

In some embodiments, the processor 810 may implement the functions of a processing unit in a terminal device, or the processor 810 may implement the functions of a processing unit in a network device, which will not be repeated here for the sake of brevity.

In some embodiments, the input interface 830 may implement the functions of a communication unit in a terminal device, or the input interface 830 may implement the functions of a communication unit in a network device.

In some embodiments, the apparatus 800 may further include an output interface 840. The processor 810 may control the output interface 840 to communicate with other devices or chips. Specifically, the processor 810 may control the output interface 840 to output information or data to other devices or chips. Optionally, the processor 810 may be located on a chip or off a chip.

In some embodiments, the output interface 840 may implement the functions of a communication unit in a terminal device, or the output interface 840 may implement the functions of a communication unit in a network device.

In some embodiments, the apparatus may be applied to the network device in the embodiments of the present disclosure, and the apparatus may implement the corresponding processes implemented by the network device in the various methods of the embodiments of the present disclosure, which will not be repeated here for the sake of brevity.

In some embodiments, the apparatus may be applied to the terminal device in the embodiments of the present disclosure, and the apparatus may implement the corresponding processes implemented by the terminal device in the various methods in the embodiments of the present disclosure, which will not be repeated here for the sake of brevity.

In some embodiments, the apparatus mentioned in the embodiments of the present disclosure may be a chip. For example, it may be a system-level chip, a system chip, a chip system, or a system-on-chip.

FIG. 18 is a schematic block diagram of a communication system 900 provided in embodiments of the present disclosure. As illustrated in FIG. 18, the communication system 900 includes a terminal device 910 and a network device 920.

Here, the terminal device 910 may be configured to implement the corresponding functions implemented by the terminal device in the foregoing methods, and the network device 920 may be configured to implement the corresponding functions implemented by the network device in the foregoing methods, which will not be described repeatedly here for the sake of brevity.

It should be understood that the processor of the embodiments of the present disclosure may be an integrated circuit chip with signal processing capabilities. In the implementation process, various steps of the foregoing method embodiment may be completed by an integrated logic circuit of hardware in a processor or an instruction in software form. The above processor may be a general-purpose processor, a digital signal processor (DSP), an application-specific integrated circuit (ASIC), a field programmable gate array (FPGA) or any of other programmable logic devices, a discrete gate or transistor logic device, or a discrete hardware component. The various methods, steps and logic block diagrams disclosed in the embodiments of the present disclosure may be implemented or executed thereby. The general-purpose processor may be a microprocessor, or the processor may be any conventional processor or the like. The steps of the method disclosed in the embodiments of the present disclosure may be directly embodied as being executed by a hardware decoding processor, or may be executed by a combination of hardware and software modules in the decoding processor. The software module may be located in a storage medium mature in the field, such as a random access memory, a flash memory, a read-only memory, a programmable read-only memory, an electrically erasable programmable memory, or a register. The storage medium is located in the memory, and the processor reads information in the memory and completes the steps of the foregoing method in combination with its hardware.

It can be understood that the memory in the embodiments of the present disclosure may be a volatile memory or a non-volatile memory, or may include both volatile and non-volatile memories. Here, the non-volatile memory may be a read-only memory (ROM), a programmable ROM (PROM), an erasable PROM (EPROM), an electrically EPROM (EEPROM), or a flash memory. The volatile memory may be a random access memory (RAM), which acts as external cache memory. By way of exemplary but not restrictive description, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that memories of the systems and methods described herein are intended to include, without being limited to, these and any other suitable types of memories.

It should be understood that the above memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memories in the embodiments of the present disclosure are intended to include but are not limited to these and any other suitable types of memories.

The embodiments of the present disclosure further provide a computer-readable storage medium for storing a computer program.

In some embodiments, the computer-readable storage medium may be applied to the network device in the embodiments of the present disclosure, and the computer program enables a computer to execute the corresponding processes implemented by the network device in the various methods of the embodiments of the present disclosure, which will not be repeated here for the sake of brevity.

In some embodiments, the computer-readable storage medium may be applied to the terminal device in the embodiments of the present disclosure, and the computer program enables a computer to execute the corresponding processes implemented by the terminal device in the various methods of the embodiments of the present disclosure, which will not be repeated here for the sake of brevity.

The embodiments of the present disclosure further provide a computer program product, including computer program instructions.

In some embodiments, the computer program product may be applied to the network device in the embodiments of the present disclosure, and the computer program instructions enable a computer to execute the corresponding processes implemented by the network device in the various methods of the embodiments of the present disclosure, which will not be repeated here for the sake of brevity.

In some embodiments, the computer program product may be applied to the terminal device in the embodiments of the present disclosure, and the computer program instructions enable a computer to execute the corresponding processes implemented by the terminal device in the various methods of the embodiments of the present disclosure, which will not be repeated here for the sake of brevity.

The embodiments of the present disclosure further provide a computer program.

In some embodiments, the computer program may be applied to the network device in the embodiments of the present disclosure. The computer program, when running on a computer, enables the computer to execute the corresponding processes implemented by the network device in the various methods of the embodiments of the present disclosure, which will not be repeated here for the sake of brevity.

In some embodiments, the computer program may be applied to the terminal device in the embodiments of the present disclosure. The computer program, when running on a computer, enables the computer to execute the corresponding processes implemented by the terminal device in the various methods of the embodiments of the present disclosure, which will not be repeated here for the sake of brevity.

Those of ordinary skill in the art may be aware that the units and algorithm steps of various examples described in conjunction with the embodiments disclosed herein are capable of being implemented by electronic hardware, or a combination of computer software and electronic hardware. Whether these functions are executed by hardware or software depends on the specific applications and design constraints of the technical solution. Professionals and technicians may use different methods to implement the described functions for each specific application, but such implementation should not be considered beyond the scope of the present disclosure.

Those skilled in the relevant art can clearly understand that, for the convenience and conciseness of description, the specific working processes of the above-described systems, devices/apparatuses and units may refer to the corresponding procedures in the foregoing method embodiments and will not be repeated here.

In the several embodiments provided by the present disclosure, it should be understood that the disclosed systems, devices/apparatuses, and methods may be implemented in other ways. For example, the device/apparatus embodiments described above are merely illustrative. For example, the division of the units is merely a logical function division. There may be other division methods in actual implementation. For example, multiple units or components may be combined or integrated into another system, or some features may be ignored or not executed. In addition, the mutual coupling or direct coupling or communication connection illustrated or discussed may be an indirect coupling or communication connection through some interfaces, devices/apparatuses or units, which may be in electrical, mechanical or other forms.

The units described as separate components may or may not be physically separated, and the components illustrated as units may or may not be physical units, that is, they may be located in one place or distributed over multiple network units. Some or all of the units may be selected according to actual needs to achieve the objectives of the solutions of the present embodiments.

In addition, various functional units in various embodiments of the present disclosure may be integrated into one processing unit, or various units may exist physically separately, or two or more units may be integrated into one unit.

If the function is implemented in the form of software functional unit and sold or used as an independent product, it may be stored in a computer-readable storage medium. Based on such an understanding, the technical solution of the present disclosure may essentially be embodied in the form of a software product, or the part that contributes to the related art, or the part of the technical solution. The computer software product is stored in a storage medium and includes several instructions for enabling a computer device (which may be a personal computer, a server, a network device, or the like) to execute all or part of the steps of the method described in each embodiment of the present disclosure. The aforementioned storage media include: U disks, mobile hard disks, read-only memories, (ROMs), random access memories (RAMs), disk or optical disk and other media capable of storing program codes.

The foregoing description is only a specific implementation mode of the present disclosure, but the protection scope of the present disclosure is not limited thereto. Any variations or replacements apparent to those skilled in the art within the technical scope disclosed by the present disclosure shall fall within the protection scope of the present disclosure. Therefore, the protection scope of the present disclosure shall be subject to the protection scope of the claims.

## Claims

1.  A method of wireless communication, comprising:

    multiplexing, by a terminal device, uplink control information (UCI) information carried in P physical uplink control channels (PUCCHs) among M PUCCHs onto physical uplink shared channels (PUSCHs) associated with same spatial parameters as the P PUCCHs among N PUSCHs, wherein the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M-P; and
    multiplexing, by the terminal device, UCI information carried in the S PUCCHs onto PUSCHs associated with a first target spatial parameter among the N PUSCHs; or transmitting, by the terminal device, first uplink information, wherein the first uplink information does not comprise at least one of: part or all of the S PUCCHs, and part or all of the PUSCHs overlapping with the S PUCCHs in the time domain among the N PUSCHs.

2.  The method according to claim 1, wherein multiplexing, by the terminal device, the UCI information carried in the S PUCCHs onto the PUSCHs associated with the first target spatial parameter among the N PUSCHs comprises: multiplexing, by the terminal device, the UCI information carried in the S PUCCHs onto the PUSCHs associated with the first target spatial parameter among the N PUSCHs in an ideal backhaul scenario.

3.  The method according to claim 1 or 2, wherein the first target spatial parameter is pre-defined, or the first target spatial parameter is pre-configured, or the first target spatial parameter is configured by a network device.

4.  The method according to claim 1, wherein transmitting, by the terminal device, the first uplink information comprises: transmitting, by the terminal device, the first uplink information according to a priority order.

5.  The method according to claim 4, wherein transmitting, by the terminal device, the first uplink information based on the priority order comprises:

    in a case where a priority index associated with an i-th PUCCH is higher than a priority index associated with a PUSCH overlapping with the i-th PUCCH in the time domain among the N PUSCHs, transmitting, by the terminal device, the first uplink information, the first uplink information not comprising the PUSCH overlapping with the i-th PUCCH in the time domain among the N PUSCHs; and/or
    in a case where the priority index associated with the i-th PUCCH is lower than the priority index associated with the PUSCH overlapping with the i-th PUCCH in the time domain among the N PUSCHs, transmitting, by the terminal device, the first uplink information, the first uplink information not comprising the i-th PUCCH;
    wherein the i-th PUCCH belongs to the S PUCCHs, i is a positive integer, and $1 \leq i \leq S$.

6.  The method according to claim 4, wherein transmitting, by the terminal device, the first uplink information based on the priority order comprises:

    in a case where a priority of uplink control information (UCI) information carried in an i-th PUCCH is higher than a priority of information carried in a PUSCH overlapping with the i-th PUCCH in the time domain among the N PUSCHs, transmitting, by the terminal device, the first uplink information, the first uplink information not comprising the PUSCH overlapping with the i-th PUCCH in the time domain among the N PUSCHs; and/or
in a case where the priority of the UCI information carried in the i-th PUCCH is lower than the priority of the information carried in the PUSCH overlapping with the i-th PUCCH in the time domain among the N PUSCHs, transmitting, by the terminal device, the first uplink information, the first uplink information not comprising the i-th PUCCH;
wherein the i-th PUCCH belongs to the S PUCCHs, i is a positive integer, and $1 \leq i \leq S$.

7. The method according to claim 4, wherein transmitting, by the terminal device, the first uplink information based on the priority order comprises:

   in a case where a priority index associated with an i-th PUCCH is the same as a priority index associated with a PUSCH overlapping with the i-th PUCCH in the time domain among the N PUSCHs, determining, by the terminal device, a priority of the i-th PUCCH and a priority of the PUSCH overlapping with the i-th PUCCH in the time domain among the N PUSCHs based on content carried in the i-th PUCCH and content carried in the PUSCH overlapping with the i-th PUCCH in the time domain among the N PUSCHs;
   in a case where the priority of the i-th PUCCH is higher than the priority of the PUSCH overlapping with the i-th PUCCH in the time domain among the N PUSCHs, transmitting, by the terminal device, the first uplink information, the first uplink information not comprising the PUSCH overlapping with the i-th PUCCH in the time domain among the N PUSCHs; and/or
   in a case where the priority of the i-th PUCCH is lower than the priority of the PUSCH overlapping with the i-th PUCCH in the time domain among the N PUSCHs, transmitting, by the terminal device, the first uplink information, the first uplink information not comprising the i-th PUCCH;
   wherein the i-th PUCCH belongs to the S PUCCHs, i is a positive integer, and $1 \leq i \leq S$.

8. The method according to claim 7, wherein

   a priority of a PUCCH carrying at least one of hybrid automatic repeat request acknowledgement (HARQ-ACK), a scheduling request (SR) and a link recovery request (LRR) is higher than a priority of a PUSCH carrying channel state information (CSI); and/or
   a priority of a PUCCH carrying at least one of HARQ-ACK, an SR and an LRR is higher than a priority of a PUSCH not carrying HARQ-ACK; and/or
   a priority of a PUSCH carrying HARQ-ACK is higher than a priority of a PUCCH carrying CSI; and/or
   a priority of a PUCCH carrying CSI is higher than a priority of a PUSCH not carrying CSI; and/or
   a priority of a PUCCH carrying at least one of HARQ-ACK, an SR and an LRR is higher than a priority of a PUSCH not carrying HARQ-ACK and CSI; and/or
   a priority of a PUCCH carrying CSI is higher than a priority of a PUSCH carrying CSI; and/or
   a priority of a PUSCH carrying HARQ-ACK is higher than a priority of a PUCCH carrying at least one of an SR and an LRR.

9. The method according to claim 1, wherein transmitting, by the terminal device, the first uplink information comprises:
   transmitting, by the terminal device, the first uplink information, the first uplink information not comprising at least one of: a PUCCH associated with a second target spatial parameter among the S PUCCHs, and a PUSCH associated with the second target spatial parameter among the PUSCHs overlapping with the S PUCCHs in the time domain among the N PUSCHs.

10. The method according to claim 9, wherein a transmission solution of the S PUCCHs is a single frequency network (SFN), and/or a transmission solution of the PUSCHs overlapping with the S PUCCHs in the time domain among the N PUSCHs is an SFN.

11. The method according to claim 9 or 10, wherein the second target spatial parameter is pre-defined, or the second target spatial parameter is pre-configured, or the second target spatial parameter is configured by a network device.

12. The method according to claim 1, wherein transmitting, by the terminal device, the first uplink information comprises:

    in a case where an i-th PUCCH is a PUCCH repeatedly transmitted in the time domain, transmitting, by the terminal device, the first uplink information, the first uplink information not comprising a present transmission of the i-th PUCCH; and/or

in a case where a PUSCH overlapping with the i-th PUCCH in the time domain among the N PUSCHs is a PUSCH repeatedly transmitted in the time domain, transmitting, by the terminal device, the first uplink information, the first uplink information not comprising a present transmission of the PUSCH overlapping with the i-th PUCCH in the time domain among the N PUSCHs;

wherein the i-th PUCCH belongs to the S PUCCHs, i is a positive integer, and $1 \leq i \leq S$.

13. The method according to claim 1, wherein transmitting, by the terminal device, the first uplink information comprises:

in a case where a priority index associated with an i-th PUCCH is the same as a priority index associated with a PUSCH overlapping with the i-th PUCCH in the time domain among the N PUSCHs, and a transmission solution of the PUSCH overlapping with the i-th PUCCH in the time domain among the N PUSCHs is space division multiplexing (SDM), transmitting, by the terminal device, the first uplink information, the first uplink information not comprising the i-th PUCCH;

wherein the i-th PUCCH belongs to the S PUCCHs, i is a positive integer, and $1 \leq i \leq S$.

14. The method according to any one of claims 5 to 13, wherein in a case where the first uplink information does not comprise the PUSCH overlapping with the i-th PUCCH in the time domain among the N PUSCHs, and UCI information carried in at least one PUCCH existing in the M PUCCHs is multiplexed onto the PUSCH overlapping with the i-th PUCCH in the time domain among the N PUSCHs for transmission, the first uplink information at least comprises the i-th PUCCH and the at least one PUCCH;

wherein the i-th PUCCH belongs to the S PUCCHs, i is a positive integer, and $1 \leq i \leq S$.

15. The method according to any one of claims 1, and 4 to 14, wherein transmitting, by the terminal device, the first uplink information comprises:

transmitting, by the terminal device, the first uplink information in a non-ideal backhaul scenario.

16. The method according to any one of claims 1 to 15, wherein the N PUSCHs comprise at least one of: a dynamically scheduled PUSCH and a scheduling-free PUSCH.

17. The method according to any one of claims 1 to 16, wherein the M PUCCHs and the N PUSCHs meet a timing condition for UCI information multiplexing.

18. The method according to any one of claims 1 to 17, wherein the M PUCCHs and the N PUSCHs are located in a same time unit.

19. The method according to claim 18, wherein the time unit is one of: a time slot, a mini-time slot, multiple symbols, a subframe, and a transmission occasion.

20. A method of wireless communication, comprising:
reporting, by a terminal device, a power headroom report (PHR) corresponding to spatial parameter information.

21. The method according to claim 20, wherein reporting, by the terminal device, the PHR corresponding to the spatial parameter information comprises:

reporting, by the terminal device, a PHR corresponding to a first target spatial parameter in multiple spatial parameters; or
reporting, by the terminal device, a respective PHR corresponding to each spatial parameter in the multiple spatial parameters; or
reporting, by the terminal device, a total PHR corresponding to all spatial parameters in the multiple spatial parameters.

22. The method according to claim 21, wherein in a case where the terminal device reports the PHR corresponding to the first target spatial parameter in the multiple spatial parameters, the PHR corresponding to the first target spatial parameter is carried via a first physical uplink shared channel (PUSCH);
wherein the first PUSCH is a PUSCH associated with the first target spatial parameter, or the first PUSCH is a PUSCH transmitted first in a time domain among respective PUSCHs associated with the multiple spatial parameters.

23. The method according to claim 22, wherein the PHR corresponding to the first target spatial parameter is an actual PHR, or the PHR corresponding to the first target spatial parameter is a virtual PHR.

24. The method according to claim 23, wherein

in a case where scheduling information or configuration information corresponding to the PUSCH associated with the first target spatial parameter is earlier than a first time interval prior to a first symbol of the first PUSCH, the PHR corresponding to the first target spatial parameter is the actual PHR; or
in a case where the PUSCH associated with the first target spatial parameter and the first PUSCH are transmitted in a same time unit, the PHR corresponding to the first target spatial parameter is the actual PHR.

25. The method according to any one of claims 22 to 24, wherein the first PUSCH is a dynamically scheduled PUSCH or a scheduling-free PUSCH.

26. The method according to any one of claims 21 to 25, wherein the PHR corresponding to the first target spatial parameter is calculated based on a power control parameter associated with the first target spatial parameter.

27. The method according to any one of claims 21 to 26, wherein the first target spatial parameter is pre-defined, or the first target spatial parameter is pre-configured, or the first target spatial parameter is configured by a network device.

28. The method according to claim 21, wherein

in a case where the terminal device reports the respective PHR corresponding to each spatial parameter in the multiple spatial parameters, the respective PHR corresponding to each spatial parameter in the multiple spatial parameters is carried via a second PUSCH; or
in a case where the terminal device reports the total PHR corresponding to all spatial parameters in the multiple spatial parameters, the total PHR corresponding to all spatial parameters in the multiple spatial parameters is carried via the second PUSCH;
wherein the second PUSCH is a PUSCH associated with a second target spatial parameter in the multiple spatial parameters, or the second PUSCH is a PUSCH transmitted first in a time domain among respective PUSCHs associated with the multiple spatial parameters.

29. The method according to claim 28, wherein the second target spatial parameter is a spatial parameter whose associated PHR meets a trigger condition in the multiple spatial parameters.

30. The method according to claim 28 or 29, wherein the respective PHR corresponding to each spatial parameter in the multiple spatial parameters is an actual PHR, or the respective PHR corresponding to each spatial parameter in the multiple spatial parameters is a virtual PHR.

31. The method according to any one of claims 28 to 30, wherein

in a case where scheduling information or configuration information corresponding to a PUSCH associated with an i-th spatial parameter is earlier than a first time interval prior to a first symbol of the second PUSCH, a PHR corresponding to the i-th spatial parameter is an actual PHR; or
in a case where the PUSCH associated with the i-th spatial parameter and the second PUSCH are transmitted in a same time unit, the PHR corresponding to the i-th spatial parameter is the actual PHR;
wherein the i-th spatial parameter belongs to the multiple spatial parameters, and i is a positive integer.

32. The method according to any one of claims 28 to 31, wherein a PHR corresponding to an i-th spatial parameter is calculated based on a power control parameter associated with the i-th spatial parameter;
wherein the i-th spatial parameter belongs to the multiple spatial parameters, and i is a positive integer.

33. The method according to any one of claims 28 to 32, wherein the second PUSCH is a dynamically scheduled PUSCH or a scheduling-free PUSCH.

34. The method according to claim 24 or 31, wherein the first time interval is a scheduling interval from a physical downlink control channel (PDCCH) to the PUSCH, or the first time interval is a processing time of the PUSCH.

35. The method according to any one of claims 21 to 34, further comprising:

receiving, by the terminal device, first configuration information;

wherein the first configuration information at least comprises a PHR reporting method and/or PHR mode information, wherein

the PHR reporting method is reporting the PHR corresponding to the first target spatial parameter in the multiple spatial parameters, or the PHR reporting method is reporting the respective PHR corresponding to each spatial parameter in the multiple spatial parameters, or the PHR reporting method is reporting the total PHR corresponding to all spatial parameters in the multiple spatial parameters; and

the PHR mode information is used to indicate that configuration information of the PHR corresponding to the first target spatial parameter is effective, or the PHR mode information is used to indicate that pieces of configuration information of the PHRs corresponding to the multiple spatial parameters are all effective.

36. The method according to claim 35, wherein in a case where the first configuration information at least comprises the PHR reporting method, reporting, by the terminal device, the PHR corresponding to the spatial parameter information comprises:

reporting, by the terminal device, the PHR corresponding to the spatial parameter information according to the PHR reporting method.

37. The method according to claim 35 or 36, wherein the PHR reporting method is determined based on capability information of the terminal device, wherein

the capability information of the terminal device comprises a PHR reporting method supported by the terminal device, wherein

the PHR reporting method supported by the terminal device comprises at least one of: reporting the PHR corresponding to the first target spatial parameter in the multiple spatial parameters, reporting the respective PHR corresponding to each spatial parameter in the multiple spatial parameters, and reporting the total PHR corresponding to all spatial parameters in the multiple spatial parameters.

38. The method according to claim 35, wherein in a case where the first configuration information at least comprises the PHR mode information, reporting, by the terminal device, the PHR corresponding to the spatial parameter information comprises:

in a case where the PHR mode information is used to indicate that the configuration information of the PHR corresponding to the first target spatial parameter is effective, reporting, by the terminal device, the PHR corresponding to the first target spatial parameter in the multiple spatial parameters; and/or

in a case where the PHR mode information is used to indicate that the pieces of configuration information of the PHRs corresponding to the multiple spatial parameters are all effective, reporting, by the terminal device, the respective PHR corresponding to each spatial parameter in the multiple spatial parameters, or reporting, by the terminal device, the total PHR corresponding to all spatial parameters in the multiple spatial parameters.

39. The method according to claim 35 or 38, wherein the PHR mode information is a radio resource control (RRC) parameter *twoPHRMode,* the RRC parameter *twoPHRMode,* when not configured to be enabled, is used to indicate that the configuration information of the PHR corresponding to the first target spatial parameter is effective, and the RRC parameter *twoPHRMode,* when configured to be enabled, is used to indicate that the pieces of configuration information of the PHRs corresponding to the multiple spatial parameters are all effective.

40. The method according to any one of claims 35 to 39, wherein the first configuration information further comprises at least one of:

a PHR periodic timer, a PHR report prohibit timer, a PHR transmission power factor change or path loss change, a PHR mode of another cell group in dual connection, a multi-cell PHR or single-cell PHR, a maximum permissible exposure (MPE) reporting permission, a power management maximum power reduction (P-MPR) threshold, and an MPE report prohibit timer.

41. A method of wireless communication, comprising:

receiving, by a network device, a power headroom report (PHR) corresponding to spatial parameter information.

42. The method according to claim 41, wherein receiving, by the network device, the PHR corresponding to the spatial parameter information, comprises:

receiving, by the network device, a PHR corresponding to a first target spatial parameter in multiple spatial parameters;

receiving, by the network device, a respective PHR corresponding to each spatial parameter in the multiple spatial parameters; or

receiving, by the network device, a total PHR corresponding to all spatial parameters in the multiple spatial parameters.

43. The method according to claim 42, wherein in a case where the network device receives the PHR corresponding to the first target spatial parameter in the multiple spatial parameters, the PHR corresponding to the first target spatial parameter is carried via a first physical uplink shared channel (PUSCH);

wherein the first PUSCH is a PUSCH associated with the first target spatial parameter, or the first PUSCH is a PUSCH transmitted first in a time domain among respective PUSCHs associated with the multiple spatial parameters.

44. The method according to claim 43, wherein the PHR corresponding to the first target spatial parameter is an actual PHR, or the PHR corresponding to the first target spatial parameter is a virtual PHR.

45. The method according to claim 44, wherein

in a case where scheduling information or configuration information corresponding to the PUSCH associated with the first target spatial parameter is earlier than a first time interval prior to a first symbol of the first PUSCH, the PHR corresponding to the first target spatial parameter is the actual PHR; or

in a case where the PUSCH associated with the first target spatial parameter and the first PUSCH are transmitted in a same time unit, the PHR corresponding to the first target spatial parameter is the actual PHR.

46. The method according to any one of claims 43 to 45, wherein the first PUSCH is a dynamically scheduled PUSCH or a scheduling-free PUSCH.

47. The method according to any one of claims 42 to 46, wherein the PHR corresponding to the first target spatial parameter is calculated based on a power control parameter associated with the first target spatial parameter.

48. The method according to any one of claims 42 to 47, wherein the first target spatial parameter is pre-defined, or the first target spatial parameter is pre-configured, or the first target spatial parameter is configured by the network device.

49. The method according to claim 42, wherein

in a case where the network device receives the respective PHR corresponding to each spatial parameter in the multiple spatial parameters, the respective PHR corresponding to each spatial parameter in the multiple spatial parameters is carried via a second PUSCH; or

in a case where the network device receives the total PHR corresponding to all spatial parameters in the multiple spatial parameters, the total PHR corresponding to all spatial parameters in the multiple spatial parameters is carried via the second PUSCH;

wherein the second PUSCH is a PUSCH associated with a second target spatial parameter in the multiple spatial parameters, or the second PUSCH is a PUSCH transmitted first in a time domain among respective PUSCHs associated with the multiple spatial parameters.

50. The method according to claim 49, wherein the second target spatial parameter is a spatial parameter whose associated PHR meets a trigger condition in the multiple spatial parameters.

51. The method according to claim 49 or 50, wherein the respective PHR corresponding to each spatial parameter in the multiple spatial parameters is an actual PHR, or the respective PHR corresponding to each spatial parameter in the multiple spatial parameters is a virtual PHR.

52. The method according to any one of claims 49 to 51, wherein

in a case where scheduling information or configuration information corresponding to a PUSCH associated with an i-th spatial parameter is earlier than a first time interval prior to a first symbol of the second PUSCH, a PHR corresponding to the i-th spatial parameter is an actual PHR; or

in a case where the PUSCH associated with the i-th spatial parameter and the second PUSCH are transmitted in a same time unit, the PHR corresponding to the i-th spatial parameter is the actual PHR;
wherein the i-th spatial parameter belongs to the multiple spatial parameters, and i is a positive integer.

53. The method according to any one of claims 49 to 52, wherein a PHR corresponding to an i-th spatial parameter is calculated based on a power control parameter associated with the i-th spatial parameter;
wherein the i-th spatial parameter belongs to the multiple spatial parameters, and i is a positive integer.

54. The method according to any one of claims 49 to 53, wherein the second PUSCH is a dynamically scheduled PUSCH or a scheduling-free PUSCH.

55. The method according to claim 45 or 52, wherein the first time interval is a scheduling interval from a physical downlink control channel (PDCCH) to the PUSCH, or the first time interval is a processing time of the PUSCH.

56. The method according to any one of claims 42 to 55, further comprising:

transmitting, by the network device, first configuration information;
wherein the first configuration information at least comprises a PHR reporting method and/or PHR mode information, wherein

the PHR reporting method is reporting the PHR corresponding to the first target spatial parameter in the multiple spatial parameters, or the PHR reporting method is reporting the respective PHR corresponding to each spatial parameter in the multiple spatial parameters, or the PHR reporting method is reporting the total PHR corresponding to all spatial parameters in the multiple spatial parameters; and
the PHR mode information is used to indicate that configuration information of the PHR corresponding to the first target spatial parameter is effective, or the PHR mode information is used to indicate that pieces of configuration information of the PHRs corresponding to the multiple spatial parameters are all effective.

57. The method according to claim 56, wherein in a case where the first configuration information at least comprises the PHR reporting method, the PHR corresponding to the spatial parameter information received by the network device is transmitted based on the PHR reporting method.

58. The method according to claim 56 or 57, wherein the PHR reporting method is determined based on capability information of a terminal device, wherein
the capability information of the terminal device comprises a PHR reporting method supported by the terminal device, wherein
the PHR reporting method supported by the terminal device comprises at least one of: reporting the PHR corresponding to the first target spatial parameter in the multiple spatial parameters, reporting the respective PHR corresponding to each spatial parameter in the multiple spatial parameters, and reporting the total PHR corresponding to all spatial parameters in the multiple spatial parameters.

59. The method according to claim 56, wherein in a case where the first configuration information at least comprises the PHR mode information, receiving, by the network device, the PHR corresponding to the spatial parameter information comprises:

in a case where the PHR mode information is used to indicate that the configuration information of the PHR corresponding to the first target spatial parameter is effective, receiving, by the network device, the PHR corresponding to the first target spatial parameter in the multiple spatial parameters; and/or
in a case where the PHR mode information is used to indicate that the pieces of configuration information of the PHRs corresponding to the multiple spatial parameters are all effective, receiving, by the network device, the respective PHR corresponding to each spatial parameter in the multiple spatial parameters, or receiving, by the network device, the total PHR corresponding to all spatial parameters in the multiple spatial parameters.

60. The method according to claim 56 or 59, wherein the PHR mode information is a radio resource control (RRC) parameter *twoPHRMode,* the RRC parameter *twoPHRMode,* when not configured to be enabled, is used to indicate that the configuration information of the PHR corresponding to the first target spatial parameter is effective, and the RRC parameter *twoPHRMode,* when configured to be enabled, is used to indicate that the pieces of configuration information of the PHR corresponding to the multiple spatial parameters are all effective.

61. The method according to any one of claims 56 to 60, wherein the first configuration information further comprises at least one of:
a PHR periodic timer, a PHR report prohibit timer, a PHR transmission power factor change or path loss change, a PHR mode of another cell group in dual connection, a multi-cell PHR or single-cell PHR, a maximum permissible exposure (MPE) reporting permission, a power management maximum power reduction (P-MPR) threshold, and an MPE report prohibit timer.

62. A terminal device, comprising: a communication unit and a processing unit, wherein

the processing unit is configured to multiple uplink control information (UCI) information carried in P physical uplink control channels (PUCCHs) among M PUCCHs onto physical uplink shared channels (PUSCHs) associated with same spatial parameters as the P PUCCHs among N PUSCHs, wherein the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M-P; and
the processing unit is further configured to multiplex UCI information carried in the S PUCCHs onto PUSCHs associated with a first target spatial parameter among the N PUSCHs; or the communication unit is configured to transmit first uplink information, wherein the first uplink information does not comprise at least one of: part or all of the S PUCCHs, and part or all of the PUSCHs overlapping with the S PUCCHs in the time domain among the N PUSCHs.

63. A terminal device, comprising a first communication unit, configured to report a power headroom report (PHR) corresponding to spatial parameter information.

64. A network device, comprising a first communication unit, configured to receive a power headroom report (PHR) corresponding to spatial parameter information.

65. A terminal device, comprising a processor and a memory, wherein the memory is configured to store a computer program, and the processor is configured to call the computer program stored in the memory and run the computer program, to enable the terminal device to perform the method according to any one of claims 1 to 19.

66. A terminal device, comprising a processor and a memory, wherein the memory is configured to store a computer program, and the processor is configured to call the computer program stored in the memory and run the computer program, to enable the terminal device to perform the method according to any one of claims 20 to 40.

67. A network device, comprising a processor and a memory, wherein the memory is configured to store a computer program, and the processor is configured to call the computer program stored in the memory and run the computer program, to enable the network device to perform the method according to any one of claims 41 to 61.

68. A chip, comprising a processor configured to call a computer program from a memory and run the computer program, to enable a device equipped with the chip to perform the method according to any one of claims 1 to 19.

69. A chip, comprising a processor configured to call a computer program from a memory and run the computer program, to enable a device equipped with the chip to perform the method according to any one of claims 20 to 40.

70. A chip, comprising a processor configured to call a computer program from a memory and run the computer program, to enable a device equipped with the chip to perform the method according to any one of claims 41 to 61.

71. A computer-readable storage medium, for storing a computer program that, when being executed, implement the method according to any one of claims 1 to 19, or the method according to any one of claims 20 to 40, or the method according to any one of claims 41 to 61.

72. A computer program product, comprising computer program instructions that, when being executed, implement the method according to any one of claims 1 to 19, or the method according to any one of claims 20 to 40, or the method according to any one of claims 41 to 61.

73. A computer program, when being executed, implementing the method according to any one of claims 1 to 19, or the method according to any one of claims 20 to 40, or the method according to any one of claims 41 to 61.

100

120    110    120

FIG. 1

Cell 1 (BWP 1)
SCS = 15 KHz

PUSCH
carrying PHR

t

Time slot

Cell 2 (BWP 2)
SCS = 60 KHz

t

First time slot
completely overlapped

FIG. 2

Cell 1 (BWP 1)
SCS = 15 KHz

PUSCH
carrying PHR

t

Time slot

Cell 2 (BWP 2)
SCS = 15 KHz

t

First time slot
overlapped

FIG. 3

TRP1    TRP2
XXXX    XXXX

PUSCH
DCI     DCI
        PUSCH

XX    XX
Antenna panel 1    Antenna panel 2

FIG. 4

Spatial parameter 1  DCI ⟶ PUSCH  |  DCI ⟶ PUSCH  |  DCI ⟶ PUSCH

Spatial parameter 2  DCI ⟶ PUSCH  |  DCI ⟶ PUSCH  |  DCI ⟶ PUSCH

## FIG. 5

Spatial parameter 1

PUCCH1    PUCCH1

DCI ⟶ PUSCH1    DCI ⟶ PUSCH1

Spatial parameter 2

DCI ⟶ PUSCH2    DCI ⟶ PUSCH2

PUCCH2

Scenario 1    Scenario 2

## FIG. 6

Spatial parameter 1

PUCCH1    

DCI ⟶ PUSCH1    DCI ⟶ PUSCH1

Spatial parameter 2

PUCCH2    PUCCH1

Scenario 1    Scenario 2

## FIG. 7

**200**

A terminal device multiplexes UCI information carried in P PUCCHs among M PUCCHs onto PUSCHs associated with same spatial parameters as the P PUCCHs among N PUSCHs, where the M PUCCHs overlap with the N PUSCHs in a time domain, and after multiplexing, S PUCCHs existing in the M PUCCHs overlap with PUSCHs among the N PUSCHs in the time domain, M, N, P and S are all positive integers, and S = M - P

S210

The terminal device multiplexes UCI information carried in the S PUCCHs onto PUSCHs associated with a first target spatial parameter among the N PUSCHs; or the terminal device transmits first uplink information, where the first uplink information does not include at least one of: part or all of the S PUCCHs, and part or all of the PUSCHs overlapping with the S PUCCHs in the time domain among the N PUSCHs.

S220

## FIG. 8

FIG. 9

**300**

FIG.10

FIG.11

Spatial PHR Triggering | Earlier time domain | PHR corresponding to spatial parameter 2 meets trigger condition
parameter 1 | | Second PUSCH | | PUSCH

Spatial parameter 2 | PUSCH | | Second PUSCH

Scenario 1 | Scenario 2

**FIG.12**

Terminal device 400

Processing unit 410

Communication unit 420

**FIG.13**

Terminal device 500

First communication unit 510

Second communication unit 520

**FIG.14**

Network device 600

First communication unit 610

Second communication unit 620

**FIG.15**

Communication device 700

Memory
720

Processor
710

Transceiver
730

FIG.16

Apparatus 800

Input interface
830

Processor
810

Memory
820

Output interface
840

FIG.17

Communication system 900

Terminal
device

910

Network
device

920

FIG.18

## INTERNATIONAL SEARCH REPORT

| International application No. |
| --- |
| **PCT/CN2022/127927** |

### A. CLASSIFICATION OF SUBJECT MATTER

H04W52/24(2009.01)i

According to International Patent Classification (IPC) or to both national classification and IPC

### B. FIELDS SEARCHED

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

CNTXT; ENTXTC; CNKI; ENTXT; DWPI; 3GPP; IEEE: PUCCH, PUSCH, UCI, 上行控制信息, 空间参数, 空间配置, 空间关系, 天线面板, TRP, CORESET, TCI, 参考信号, 能力信息, 波束信息, 关联, 重叠, 冲突, 矛盾, 碰撞, 复用, 优先级, 空间参数信息, PHR, 实际PHR, 虚拟PHR, 真实PHR, 周期, spatial, setting, relation, conference, capability, beam, associat+, overlap +, multiple, priority, real PHR, virtual PHR

### C. DOCUMENTS CONSIDERED TO BE RELEVANT

| Category* | Citation of document, with indication, where appropriate, of the relevant passages | Relevant to claim No. |
| --- | --- | --- |
| A | CN 115175332 A (VIVO COMMUNICATION TECHNOLOGY CO., LTD.) 11 October 2022 (2022-10-11) description, paragraphs 59-213 | 1-19, 62, 65, 68, 71-73 |
| X | CN 110536397 A (ZTE CORP.) 03 December 2019 (2019-12-03) description, paragraphs 154-165 and 205-209 | 20-23, 26-32, 34, 39, 41-44, 47-53, 55, 60, 63, 64, 66, 67, 69-73 |
| Y | CN 110536397 A (ZTE CORP.) 03 December 2019 (2019-12-03) description, paragraphs 154-165 and 205-209 | 24, 25, 33, 35-38, 40, 45, 46, 54, 56-59, 61 |
| Y | CN 113396616 A (LENOVO (SINGAPORE) PTE. LTD.) 14 September 2021 (2021-09-14) description, paragraphs 198, 207, 211 and 258 | 24, 25, 33, 35-38, 40, 45, 46, 54, 56-59, 61 |
| X | US 2020205090 A1 (LENOVO (SINGAPORE) PTE. LTD.) 25 June 2020 (2020-06-25) description, paragraphs 66-76 | 20-23, 26-32, 34, 39, 41-44, 47-53, 55, 60, 63, 64, 66, 67, 69-73 |

✓ Further documents are listed in the continuation of Box C.　　✓ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 July 2023** | **12 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/127927**

| C. | DOCUMENTS CONSIDERED TO BE RELEVANT | |
|---|---|---|
| Category* | Citation of document, with indication, where appropriate, of the relevant passages | Relevant to claim No. |
| A | CN 114071571 A (DATANG MOBILE COMMUNICATIONS EQUIPMENT CO., LTD.) 18 February 2022 (2022-02-18)<br>      entire document | 1-73 |
| A | CN 114930960 A (BEIJING XIAOMI MOBILE SOFTWARE CO., LTD.) 19 August 2022 (2022-08-19)<br>      entire document | 1-73 |
| A | SAMSUNG. "R1-2112446 draftCR_38213-MIMO"<br>*3GPP tsg_ran\wg1_rl1*, 10 November 2021 (2021-11-10),<br>      entire document | 1-73 |

Form PCT/ISA/210 (second sheet) (July 2022)

## INTERNATIONAL SEARCH REPORT

| International application No. |
| --- |
| **PCT/CN2022/127927** |

**Box No. III    Observations where unity of invention is lacking (Continuation of item 3 of first sheet)**

This International Searching Authority found multiple inventions in this international application, as follows:

The present application comprises two groups of claims, wherein the first group of claims comprises independent claims 1 and 62, and the second group of claims comprises claims 20, 41, 63 and 64. The same technical feature included in the first group of claims and the second group of claims is "spatial parameter information"; however, the feature is common general knowledge in the art, that is, the first group of claims and the second group of claims do not have a same or corresponding special technical feature, and therefore lack unity of invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2022/127927**

| Patent document cited in search report | | | Publication date (day/month/year) | Patent family member(s) | | | Publication date (day/month/year) |
|---|---|---|---|---|---|---|---|
| CN | 115175332 | A | 11 October 2022 | WO | 2022213899 | A1 | 13 October 2022 |
| CN | 110536397 | A | 03 December 2019 | KR | 20220046578 | A | 14 April 2022 |
| | | | | WO | 2021027863 | A1 | 18 February 2021 |
| | | | | TW | 202112169 | A | 16 March 2021 |
| | | | | EP | 4017144 | A1 | 22 June 2022 |
| | | | | JP | 2022543895 | A | 14 October 2022 |
| | | | | US | 2022322248 | A1 | 06 October 2022 |
| CN | 113396616 | A | 14 September 2021 | WO | 2020165879 | A1 | 20 August 2020 |
| | | | | US | 2022046557 | A1 | 10 February 2022 |
| | | | | WO | 2020165881 | A1 | 20 August 2020 |
| | | | | EP | 3925319 | A1 | 22 December 2021 |
| | | | | US | 2020267667 | A1 | 20 August 2020 |
| | | | | US | 11290968 | B2 | 29 March 2022 |
| | | | | US | 2020267659 | A1 | 20 August 2020 |
| | | | | US | 11160028 | B2 | 26 October 2021 |
| US | 2020205090 | A1 | 25 June 2020 | EP | 3900445 | A2 | 27 October 2021 |
| | | | | US | 11122524 | B2 | 14 September 2021 |
| | | | | WO | 2020128622 | A2 | 25 June 2020 |
| | | | | WO | 2020128622 | A3 | 27 August 2020 |
| | | | | US | 2021410083 | A1 | 30 December 2021 |
| CN | 114071571 | A | 18 February 2022 | | None | | |
| CN | 114930960 | A | 19 August 2022 | WO | 2022110028 | A1 | 02 June 2022 |

Form PCT/ISA/210 (patent family annex) (July 2022)